(19)

Europäisches Patentamt
European Patent Office
Office européen des brevets

(11) **EP 3 657 902 B1**

(12) **EUROPEAN PATENT SPECIFICATION**

(45) Date of publication and mention
of the grant of the patent:
**15.01.2025 Bulletin 2025/03**

(51) International Patent Classification (IPC):
**H04W 92/20** (2009.01)    **H04W 16/32** (2009.01)
**H04W 76/30** (2018.01)    **H04W 76/38** (2018.01)
**H04W 28/00** (2009.01)    **H04W 76/15** (2018.01)

(21) Application number: **19210569.0**

(22) Date of filing: **21.11.2019**

(52) Cooperative Patent Classification (CPC):
**H04W 92/20; H04L 47/82; H04L 47/824;
H04W 76/16;** H04W 76/38

(54) **METHOD AND APPARATUS FOR TRANSMITTING AND RECEIVING SIGNALS IN WIRELESS COMMUNICATION SYSTEM**

VERFAHREN UND VORRICHTUNG ZUM SENDEN UND EMPFANGEN VON SIGNALEN IN EINEM DRAHTLOSEN KOMMUNIKATIONSSYSTEM

PROCÉDÉ ET APPAREIL DE TRANSMISSION ET DE RÉCEPTION DE SIGNAUX DANS UN SYSTÈME DE COMMUNICATION SANS FIL

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **21.11.2018 KR 20180144848**

(43) Date of publication of application:
**27.05.2020 Bulletin 2020/22**

(73) Proprietor: **Samsung Electronics Co., Ltd.
Suwon-si, Gyeonggi-do 16677 (KR)**

(72) Inventors:
• **RYOO, Sunheui**
  16677 Suwon-si (KR)
• **LIM, Hyungtaig**
  16677 Suwon-si (KR)
• **CHA, Hwajin**
  16677 Suwon-si (KR)
• **KIM, Janghwan**
  16677 Suwon-si (KR)
• **LEE, Jeongyoon**
  16677 Suwon-si (KR)

(74) Representative: **HGF
HGF Limited
1 City Walk
Leeds LS11 9DX (GB)**

(56) References cited:
**WO-A1-2016/071311    US-A1- 2015 043 492
US-A1- 2016 338 039**

• **CATT: "Signaling Impact over S1/Xn", vol. RAN WG3, no. Venice, Italy; 20131007 - 20131011, 28 September 2013 (2013-09-28), XP050719985, Retrieved from the Internet <URL:http://www.3gpp. org/ftp/tsg_ran/WG3_lu/TSGR3_81bis/Docs/> [retrieved on 20130928]**
• **NOKIA ET AL: "NeedForGap capability supported for inter-RAT measurement to NR frequency before EN-DC configuration", vol. RAN WG2, no. Busan, South Korea; 20180521 - 20180525, 20 May 2018 (2018-05-20), XP051444810, Retrieved from the Internet <URL:http://www.3gpp.org/ftp/Meetings% 5F3GPP%5FSYNC/RAN2/Docs/> [retrieved on 20180520]**
• **INTEL CORPORATION: "Detailed signaling procedure for dual connectivity", vol. RAN WG2, no. Ljubljana, Slovenia; 20131007 - 20131011, 28 September 2013 (2013-09-28), XP050719207, Retrieved from the Internet <URL:http://www.3gpp. org/ftp/tsg_ran/WG2_RL2/TSGR2_83bis/Docs/> [retrieved on 20130928]**

EP 3 657 902 B1

**(Cont. next page)**

• **MEDIATEK INC: "NR serving cell in LTE measurement report", vol. RAN WG2, no. Reno, Nevada, USA; 20171127 - 20171201, 16 November 2017 (2017-11-16), XP051371058, Retrieved from the Internet <URL:http://www.3gpp.org/ftp/tsg% 5Fran/WG2%5FRL2/TSGR2%5F100/Docs/> [retrieved on 20171116]**

# EP 3 657 902 B1

## Description

## BACKGROUND

### 1. Field

The disclosure relates to a method and apparatus for transmitting and receiving signals including information in a wireless communication system.

### 2. Description of Related Art

In order to satisfy wireless data traffic demands that tend to increase after 4th generation (4G) communication system commercialization, efforts to develop an enhanced 5th generation (5G) communication system or a pre-5G communication system are being made. For this reason, the 5G communication system or pre-5G communication system is called a beyond 4G network communication system or a post long term evolution (LTE) system. In order to achieve a high data transfer rate, the 5G communication system is considered to be implemented in a mmWave band (e.g., 60 GHz band). In order to reduce a loss of electric waves and increase the transfer distance of electric waves in the mmWave band, beamforming, massive multiple-input and multiple-output (MIMO), full dimensional MIMO (FD-MIMO), array antenna, analog beam-forming and large scale antenna technologies are being discussed in the 5G communication system. Furthermore, in order to improve the network of a system, technologies, such as an improved small cell, an advanced small cell, a cloud radio access network (cloud RAN), an ultra-dense network, device to device communication (D2D), wireless backhaul, a moving network, cooperative communication, coordinated multi-points (CoMP) and reception interference cancellation, are being developed in the 5G communication system. In addition, hybrid frequency-shift keying (FSK) and quadrature amplitude modulation (QAM) (FQAM) and sliding window superposition coding (SWSC) that are advanced coding modulation (ACM) schemes, and improved filter bank multi-carrier (FBMC), non-quadrature multiple access (NOMA) and sparse code multiple access (SCMA) are being developed in the 5G system.

The Internet evolves from a human-centered connection network over which human generates and consumes information to Internet of things (IoT) in which information is exchanged and process between distributed elements, such as things. An Internet of Everything (IoE) technology in which a big data processing technology through a connection with a cloud server is combined with the IoT technology is emerging. In order to implement the IoT, technical elements, such as the sensing technology, wired/wireless communication and network infrastructure, service interface technology and security technology, are required. Accordingly, technologies, such as a sensor network, machine to machine (M2M) and machine type communication (MTC) for a connection between things, are recently researched. In the IoT environment, an intelligent Internet technology (IT) service in which a new value is created for human life by collecting and analyzing data generated from connected things may be provided. The IoT may be applied to fields, such as a smart home, a smart building, a smart city, a smart car or a connected car, a smart grid, health care, smart home appliances, and advanced medical services, through convergence and composition between the existing information technology (IT) and various industries.

Accordingly, various attempts to apply the 5G communication system to the IoT are being made. For example, 5G communication technologies, such as a sensor network, machine to machine (M2M) and machine type communication (MTC), are implemented by schemes, such as beamforming, MIMO, and an array antenna. The application of a cloud wireless access network (cloud RAN) as the aforementioned big data processing technology may be said to be an example of convergence between the 5G technology and the IoT technology.

The 5G communication system may be provided in various structures. One of the various structures is a non-stand-alone (NSA) structure. Evolved universal terrestrial radio access (E-UTRA) next radio (NR) dual connectivity (EN-DC), that is, one of the NSA structures, is a network structure supporting dual connectivity for an LTE cell and a 5G cell (may be hereinafter interchangeably used with a new radio or next radio (NR) cell).

The above information is presented as background information only to assist with an understanding of the disclosure. No determination has been made, and no assertion is made, as to whether any of the above might be applicable as prior art with regard to the disclosure.

The document "Signaling Impact over S1/Xn", 3GPP TSG RAN WG3#81bis, at http://www.3gpp.org/ftp/ts g_ran/WG3_lu/TSGR3_81bis/Docs, R3-131711, is a paper on SeNB addition, removal and reconfiguration. The document "NeedForGap capability supported for inter-RAT measurement to NR frequency before EN-DC configuration", 3GPP TSG RAN WG2 Meeting #102, at http://www.3gpp.org/ftp/Meetings%SF3GPP%SFSYNC/RAN2/Docs, RS-1808552, is a paper about whether measurement gap for inter-RAT measurement to NR frequency is needed or not. The document "Detailed signaling procedure for dual connectivity", 3GPP TSG RAN 2 Meeting #83bis, , at http://www.3gpp.org/ftp/tsg_ran/W G2_RL2/TSGR2_83bis/Docs, R2-133491, discusses a signaling procedure in SCell addition/removal/reconfiguration based on C1 control plane architecture. WO 2016/071311 A1 discusses methods of dual connectivity in wireless communications. US 2015/043492 A1 discusses a method of providing dual connectivity in a wireless communication system. US 2016/338039 A1 discusses a method and system for handling of special Scall selection in dual connectivity.

## SUMMARY

In order to efficiently support dual connectivity, connection management needs to be efficiently performed between network entities. Particularly, the addition and release of a secondary node need to be efficiently performed. Furthermore, a dual connectivity system needs to control the addition and release of a secondary node based on a specific service or an operator's requirements of the disclosure provide.

Aspects of the disclosure are to address at least the above-mentioned problems and/or disadvantages and to provide at least the advantages described below. The scope of protection of the present invention is defined by the appended independent claims. Optional features are specified by the dependent claims.

Additional aspects will be set forth in part in the description which follows and, in part, will be apparent from the description, or may be learned by practice of the presented embodiments.

Other aspects, advantages, and salient features of the disclosure will become apparent to those skilled in the art from the following detailed description, which, taken in conjunction with the annexed drawings, discloses various embodiments of the disclosure.

## BRIEF DESCRIPTION OF THE DRAWINGS

The above and other aspects, features and advantages of certain embodiments of the disclosure will be more apparent from the following description, taken in conjunction with the accompanying drawings, in which:

FIG. 1 is a diagram illustrating the structure of a master node (MN) and secondary node (SN) performing dual connectivity according to an embodiment of the disclosure;

FIG. 2 is a diagram illustrating a protocol structure of EN-DC according to an embodiment of the disclosure;

FIG. 3 is a diagram illustrating an example in which an MN sets a threshold, that is, a criterion for a traffic state, when the MN performs a measurement configuration and release on an SN according to an embodiment of the disclosure;

FIG. 4 is a diagram illustrating an example in which an SN addition and release condition is independently set for each network entity (NE) in an EN-DC system according to an embodiment of the disclosure;

FIG. 5 is a diagram illustrating an example in which a traffic threshold for SN addition and release is set according to an embodiment of the disclosure;

FIG. 6 is a diagram illustrating messages transmitted and received between NEs in an EN-DC system according to an embodiment of the disclosure;

FIG. 7A is a diagram illustrating a control procedure for SN-initiated SN release according to an embodiment of the disclosure;

FIG. 7B is a diagram illustrating a procedure related to an SN during a control procedure for SN-initiated SN release according to an embodiment of the disclosure;

FIG. 8A is a diagram illustrating a control procedure for MN-initiated SN release according to an embodiment of the disclosure;

FIG. 8B is a diagram more specifically illustrating a procedure of an MN among control procedures for MN-initiated SN release according to an embodiment of the disclosure;

FIG. 9 is a diagram illustrating an example of an SN addition operation performed by a master eNB (MeNB) according to an embodiment of the disclosure;

FIG. 10 is a diagram illustrating an example of an SN release operation performed by an MeNB according to an embodiment of the disclosure;

FIG. 11 is a diagram illustrating an example of an SN release operation performed by a secondary gNB (SgNB) according to an embodiment of the disclosure;

FIG. 12 is a diagram illustrating an example of an inactivity timer configuration operation performed by an SgNB according to an embodiment of the disclosure;

FIG. 13 is a block diagram illustrating the structure of an MeNB according to an embodiment of the disclosure;

FIG. 14 is a block diagram illustrating the structure of an SgNB according to an embodiment of the disclosure; and

FIG. 15 is a block diagram illustrating the structure of a terminal according to an embodiment of the disclosure.

Throughout the drawings, it should be noted that like reference numbers are used to depict the same or similar elements, features, and structures.

## DETAILED DESCRIPTION

The following description with reference to accompanying drawings is provided to assist in a comprehensive understanding of various embodiments of the disclosure as defined by the claims and their equivalents. It includes various specific details to assist in that understanding but these are to be regarded as merely exemplary. Accordingly, those of ordinary skill in the art will recognize that various changes and modifications of the various embodiments described herein can be made without departing from the scope of the disclosure. In addition, descriptions of well-known functions and constructions may be omitted for clarity and conciseness.

The terms and words used in the following description and claims are not limited to the bibliographical meanings, but, are merely used by the inventor to enable a clear and consistent understanding of the disclosure. Accordingly, it should be apparent to those skilled in the art that the following description of various embodiments of the disclosure is provided for illustration purpose only and not for the purpose of limiting the disclosure as defined by the appended claims and their equivalents.

It is to be understood that the singular forms "a," "an," and "the" include plural referents unless the context clearly dictates otherwise. Thus, for example, reference to "a component surface" includes reference to one or more of such surfaces.

For the same reason, in the accompanying drawings, some elements are enlarged, omitted or depicted schematically. Furthermore, the size of each element does not accurately reflect its real size. In the drawings, the same or similar elements are assigned the same reference numerals.

The merits and characteristics of the disclosure and a method for achieving the merits and characteristics will become more apparent from the embodiments described in detail in conjunction with the accompanying drawings. However, the disclosure is not limited to the disclosed embodiments, but may be implemented in various different ways. The embodiments are provided to only complete the disclosure of the disclosure and to allow those skilled in the art to understand the category of the disclosure. The disclosure is defined by the category of the claims. The same reference numerals will be used to refer to the same or similar elements throughout the drawings. Furthermore, in describing the disclosure, a detailed description of a related known function or configuration will be omitted if it is deemed to make the gist of the disclosure unnecessarily vague. Furthermore, terms to be described hereunder have been defined by taking into consideration functions in the disclosure, and may be different depending on a user, an operator's intention or practice.

Hereinafter, a base station is a main agent that performs resource allocation for a terminal, and may be at least one of a gNode B, an eNode B, a Node B, a base station (BS), a radio access unit, a base station controller or a node on a network. A terminal may include a user equipment (UE), a mobile station (MS), a cellular phone, a smartphone, a computer or a multimedia system capable of performing a communication function. In the disclosure, downlink (DL) means the radio transmission path of a signal transmitted from a base station to a terminal, and uplink (UL) means the radio transmission path of a signal transmitted from a terminal to a base station. Furthermore, hereinafter, an LTE or LTE-Advanced (LTE-A) system may be described as an example, but an embodiment of the disclosure may be applied to other communication systems having a similar technical background or channel form. For example, other communication systems may include a 5th generation mobile communication technology (5G, new radio or NR) developed after LTE-A, and the following 5G may be a concept including other services similar to the existing LTE and LTE-A. Furthermore, the disclosure may also be applied to other communication system through some modifications within a range that does not greatly depart from the range of the disclosure based on a decision of a person skilled in the art.

In the disclosure, it will be understood that each of the blocks of the flowchart drawings and combinations of the blocks in the flowchart drawings can be executed by computer program instructions. These computer program instructions may be mounted on the processor of a general purpose computer, a special purpose computer or other programmable data processing apparatus, so that the instructions executed by the processor of the computer or other programmable data processing apparatus create means for executing the functions specified in the flowchart block(s). These computer program instructions may also be stored in computer-usable or computer-readable memory that can direct a computer or other programmable data processing equipment to function in a particular manner, such that the instructions stored in the computer-usable or computer-readable memory produce an article of manufacture including instruction means that implement the function specified in the flowchart block(s). The computer program instructions may also be loaded on a computer or other programmable data processing apparatus to cause a series of operations to be performed on the computer or other programmable apparatus to produce a computer-executed process, so that the instructions performed on the computer or other programmable apparatus provide operations for executing the functions described in the flowchart block(s).

Furthermore, each block of the flowchart drawings may represent a portion of a module, a segment or code, which includes one or more executable instructions for implementing a specified logical function(s). It should also be noted that in some alternative implementations, the functions noted in the blocks may be performed out of order. For example, two blocks shown in succession may in fact be executed substantially concurrently or the blocks may sometimes be executed in the reverse order, depending upon the functionality involved. In this case, the term "unit", as used in the present embodiment means software or a hardware component, such as a field programmable gate array (FPGA) or an application-specific integrated circuit (ASIC), and the "unit" performs specific tasks. The "unit" may advantageously be configured to reside on an addressable storage medium and configured to operate on one or more processors. Accordingly, the "unit" may include, for example, components, such as software components, object-oriented software components, class components, and task components, processes, functions, attributes, procedures, sub-routines, segments of program code, drivers, firmware, microcode, circuitry, data, databases, data structures, tables, arrays, and variables. The functionalities provided in the components and "units" may be combined into fewer components and "units" or may be further separated into additional components and "units." Furthermore, the components and "units" may be implemented to operate on one or more central processing units (CPUs) within a device or a security multimedia card. Furthermore, in one embodiment, "~unit'' may include one or more processors.

E-UTRA NR dual connectivity (EN-DC) is one of NSA structures, and is a network structure supporting dual connectivity through an LTE base station supporting an LTE cell and an NR base station supporting an NR cell. A terminal camps on an LTE cell, and may perform a 4G NAS procedure. Furthermore, a terminal may transmit and receive control signaling and data through an LTE cell and an evolved packet core (EPC) (may be understood as a 4G network). A terminal may transmit and receive user data through an LTE cell and an NR cell connected thereto through a network interface.

The disclosure relates to a connection management function between independent network entities (may be hereinafter interchangeably used with an NE), including a master node (may be hereinafter interchangeably used with an MN) and a secondary node (may be hereinafter interchangeably used with an SN) in a dual connectivity system. Specifically, the disclosure includes a method for an MN base station and an SN base station to control an SN addition and SN release and radio resource control (RRC) release through such connection management. The disclosure is described assuming that an MN is an LTE base station (or 4th generation communication system (hereinafter referred to as "4G") base station or E-UTRAN or evolved node B (eNB)) and an SN is a new radio or next radio (NR) base station (or 5th generation communication system (hereinafter referred to as "5G") base station or a gNode B (gNB)) (this may be referred to as E-UTRA NR dual connectivity (EN-DC)), but may be applied to LTE-DC (i.e., dual connectivity between LTE base stations) on a 4G system or EN-DC or NR-NR DC (i.e., dual connectivity between NR base stations) on a 5G system and similar systems thereof.

Specifically, the disclosure proposes the following contents in a dual connectivity system. First, the disclosure proposes the buffer situation of an MN base station, which may be an inter-radio access technology (RAT) measurement configuration condition of an MN and a condition in which an SN addition is performed, and a criterion for the quality of service (QoS) of a bearer. Furthermore, the disclosure proposes a criterion for the present QoS situation of a bearer monitored by an MN base station and a criterion for an SN base station buffer situation monitored by an SN base station, which may be conditions in which SN release is performed.

Second, the disclosure proposes a user inactivity timer configuration operation for an MN base station and an SN base station to control an SN addition and SN release and RRC release. Specifically, the disclosure proposes a control signaling procedure based on a corresponding mode for selecting and configuring the start main agent of SN release as an MN base station or an SN base station based on priority (e.g., terminal low power consumption, the minimization of a load of a core network, or delay minimization) of considerations in a communication network operation. Furthermore, the disclosure proposes a method of differentiating and configuring a user inactivity timer and a control signaling procedure for controlling the configuration. Such a timer differentiation configuration method includes an identification method based on a UE category, service for each bearer or an activity notification level.

An MN, that is, a term used in the disclosure, is a master node, and may be interchangeably used with an MeNB, MgNB or eNB in an embodiment of the disclosure. Furthermore, an SN is a secondary node, and may be interchangeably used with an SeNB, SgNB or gNB in an embodiment of the disclosure. Furthermore, the disclosure is not limited to such terms, and an MN and an SN are connected to a network and are main agents for resource allocation for a terminal. In the disclosure, a terminal may include a user equipment (UE), a mobile station (MS), a terminal, a cellular phone, a smartphone, a computer or a multimedia system capable of performing a communication function. In the disclosure, downlink (DL) means the radio transmission path of a signal transmitted from a base station to a terminal, and uplink (UL) means the radio transmission path of a signal transmitted from a terminal to a base station.

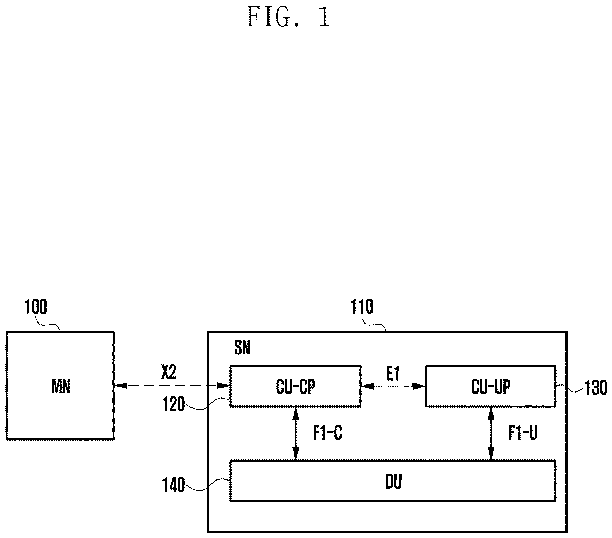

FIG. 1 is a diagram illustrating the structure of an MN and SN performing dual connectivity according to an embodiment of the disclosure.

Referring to FIG. 1, a dual connectivity system is configured with an MN 100 and an SN 110. In a 3rd generation partnership project (3GPP) 5G NR system, the SN 110 (or gNB), that is, a 5G base station, is split into three NEs, including a central unit-control plane (CU-CP) 120, a central unit-user plane (CU-UP) 130, and a distributed unit (DU) 140. For example, a radio resource control (RRC) packet data convergence protocol (PDCP) and a service data adaptation protocol (SDAP) protocol may be positioned in a CU. Radio link control (RLC), medium access control (MAC), physical layer (PHY) protocols may be positioned in the DU. The CU-CP is an NE related to a control plane, and may specifically perform connection setup, mobility and security-related functions. The CU-UP is an NE related to a user plane, and may perform data transmission and reception-related functions of a user.

Each related parameter may be configured and operated for each NE based on the function split of such a 5G base station. Accordingly, each NE may configure and operate an independent parameter, and control signaling for reporting a parameter configuration and state is necessary between NEs.

The disclosure includes a method for an MN base station and an SN base station to control an SN addition and SN release and RRC release through such connection management.

A method of configuring and supporting a mode for sublating intra-RAT measurement and an SN addition is described below.

First, an operation of controlling to add an SN only when an MN transmits and receives a large amount of data is described. Table 1 below proposes a mode in which an MN identifies an SN addition in a dual connectivity system. The mode is a criterion in which an MN identifies whether to add an SN, and may include at least one of three criteria based on blind, measurement, and traffic. Hereinafter, the measurement described in embodiments of the disclosure includes SN measurement for a radio resource management (RRM) use, which is configured by a base station for an SN addition in an MR-DC system ((NG)EN-DC, NE-DC, NR-DC) and measured by a terminal. Specifically, in an embodiment of the EN-DC system, the measurement includes Inter-RAT B1 Measurement for NR configured by an MeNB (E-UTRA) base station. In order to identify whether to perform an SgNB Addition (may be hereinafter interchangeably used with an SgNB add) operation, if a configuration that may include at least one of the three criteria based on blind, measurement, and traffic is considered, there are five (including an SgNB addition mode) modes like Table 1. Such modes may be configured for each cell, and such a mode and a separate reference value based on a mode may be configured for each terminal group.

Furthermore, a configuration for an SN addition may be controlled based on service profile identifier (SPID) information of a fixed wireless access (FWA) terminal. For example, the FWA terminal may be assigned a given SPID. An SN addition may be performed on an FWA terminal (or customer-premises equipment or customer-provided equipment (CPE) identified based on SPID information in the blind addition mode. In the case of a mobile UE, an SN addition may be performed based on measurement. Such an operation may be applied to a terminal although the terminal is not an FWA terminal or a CPE terminal. For example, such an operation may be performed on a given terminal manufacturer and/or device type. Such an SPID-based corresponding operation requires an operation for a home subscriber server (HSS) or mobility management entity (MME) of an operator core network to configure RAT/frequency selection priority (RFSP) of a terminal capable of performing EN-DC (hereinafter referred to as an "EN-DC terminal"). An SPID in a base station may be mapped to an RFSP assigned by an HSS or MME. The base station inputs an SPID to each target frequency band as a system parameter based on corresponding RFSP (i.e., assigns the SPID of the terminal). The type of terminal may be identified based on the SPID of the terminal through such a process.

Table 1

| mode | SN addition mode | Description of operation |
|---|---|---|
| 1 | Blind | Perform an operation of adding a gNB on a colocated gNB cell without a condition. (the colocated gNB means a base station which is positioned at the same or similar location as an MeNB and controls a cell expected to have the same or similar channel state as a terminal). |
| 2 | Blind and traffic | Perform an operation of adding a gNB on a colocated gNB cell only when traffic exceeds a threshold. |
| 3 | Measurement | Perform an operation of adding a gNB on a measured cell. |
| 4 | Measurement and traffic | Perform an operation of adding a gNB when a measured cell and traffic exceed a threshold. |
| 5 | Traffic and measurement | Perform an operation of adding an SgNB when an MN receives a measurement report (MR) by configuring measurement if a traffic condition exceeds a threshold. |

Second, an operation for terminal low power is described.

A terminal power consumption problem may occur because a dual connectivity terminal has to monitor both the base stations signals (this may include a signal on a physical downlink control channel (PDCCH), particularly) of an MN and SN. In a low-capacity traffic support situation, such terminal power consumption can be reduced through SN addition sublation and SN release control.

For such an operation, if the SN addition modes 2, 4 and 5 of Table 1 are configured, an operation of identifying an SN addition based on a traffic state is performed. Such a mode has increased implementation complexity for monitoring traffic and comparing thresholds compared to the SN addition modes 1 and 3, but can reduce power consumption of a dual connectivity terminal by conditionally performing an SN addition.

Specifically, the SN addition mode 2 has a delay reduction effect because a base station does not perform a measurement configuration and thus does not need to receive a measurement report from a terminal (this may be called a blind mode in this regard). In such a mode, an MN base station performs an SN addition on a colocated SN cell only when traffic exceeds a threshold.

Furthermore, a method of identifying an SN addition is described below based on traffic states applied to the SN addition modes 2, 4 and 5. This is a method of performing an operation of adding an SgNB when a traffic capacity is a given level or more. A criterion for identifying whether a traffic capacity is a given level or more includes the following criteria.

- If the amount of data accumulated in a buffer is a threshold or more in bearers to be changed into SCG bearers after an SN addition procedure based on a criterion (e.g., quality class identifier (CQI) for each bearer or allocation and retention priority (APR) value) set by a communication operator
- If the number of bearers including traffic having a threshold or more is a pre-defined number or more
- If the amount of data accumulated in a buffer as the traffic as the entire terminal is a threshold or more
- If the amount of input traffic per reference time of one or a plurality of protocol layers is a threshold or more
- If the amount of output traffic per reference time of one or a plurality of protocol layers is a threshold or more

In the disclosure, an operation of triggering an operation of adding an SgNB when at least one of the conditions is satisfied is described below.

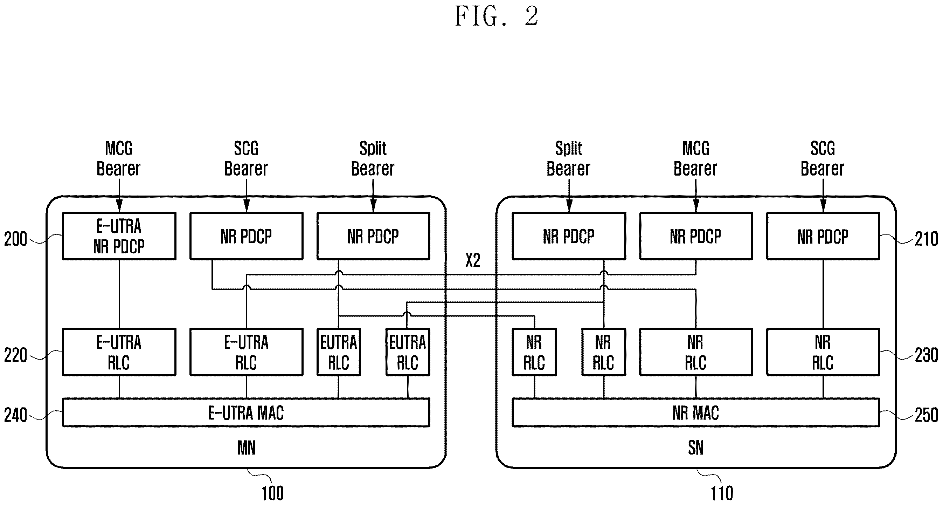

FIG. 2 is a diagram illustrating a protocol structure of EN-DC according to an embodiment of the disclosure.

Referring to FIG. 2, an MN 100 may include an evolved universal terrestrial radio access (E-UTRA) and NR PDCP 200, and NR PDCP 210, E-UTRA RLC 220 and E-UTRA MAC 240 protocols. Furthermore, an SN 110 may include NR PDCP 210, NR RLC 230 and NR MAC 250 protocols. A master cell group (MCG) bearer may be connected through the E-UTRA and NR PDCP 200 and the NR PDCP 210 and connected to the E-UTRA RLC 220. A secondary cell group (SCG) bearer may be connected through the NR PDCP 210 and connected to the NR RLC 230. A split bearer may be connected through the NR PDCP 210 and connected to the E-UTRA RLC 220 and the NR RLC 230.

The traffic state may be identified based on whether buffer occupancy (BO) is a threshold reference or more based on such a bearer and protocol structure. Specifically, the traffic state may be identified based on BO for each protocol layer. BO for each protocol layer may be identified based on Table 2. DL traffic and UL traffic states are identified based on the BO of a protocol layer according to Table 2.

Table 2

| Case | DL traffic state identification protocol layer | UL traffic state identification protocol layer |
|---|---|---|
| 1 | PDCP | PDCP |
| 2 | PDCP | RLC |
| 3 | PDCP | MAC |
| 4 | RLC | PDCP |
| 5 | RLC | RLC |
| 6 | RLC | MAC |
| 7 | MAC | PDCP |
| 8 | MAC | RLC |
| 9 | MAC | MAC |

Some of the contents of Table 2 are described specifically below. In Case 3, a DL traffic state may be identified based on whether PDCP BO is a threshold or more, and an UL traffic state may be identified based on whether MAC BO is a threshold or more. Alternatively, Case 7 is an example in which a DL traffic state is identified based on MAC BO and an UL traffic state is identified based on PDCP BO. Table 2 describes a case where the DL or UL traffic state is identified based on one protocol layer. In addition to Table 2, the DL or UL traffic state may be identified based on a combination of BOs of two or more protocol layers. For example, the disclosure includes a method of identifying a DL traffic state based on PDCP and RLC and a method of identifying an UL traffic state by considering all PDCP, RLC and MAC.

An SN addition may be identified by an MN when at least one of DL or UL traffic criteria is satisfied or both DL and UL criteria are satisfied based on each of corresponding criteria and a combination of the corresponding criteria.

In one embodiment of the disclosure, an operation of identifying an SN addition by identifying a DL traffic state based on whether PDCP BO is a threshold or more and identifying an UL traffic state based on whether MAC BO is a threshold or more is described below.

DL PDCP BO is split in a bearer unit and operates. Accordingly, whether BO is a threshold or more may be identified for each bearer. Accordingly, a bearer type change (from an MCG bearer) to an SCG bearer may be performed only on a bearer having BO of a threshold or more through an SN addition. If an UL traffic state is identified based on a MAC layer, each bearer of BO is not distinguished in MAC. Accordingly, a bearer type change operation from an MCG bearer to an SCG bearer may be performed on all bearers through an SN addition for all the bearers for each UE.

The SN addition modes 4 and 5 are described below. The SN addition modes 4 and 5 are MR-based SN addition modes. In the modes, a base station performs a measurement configuration on a terminal prior to an SN addition, selects an SN based on a measurement report (MR) transmitted by the terminal, and performs an addition.

Accordingly, a corresponding mode operates by considering both the present traffic situation and measurement in order to identify an SN addition.

In an operation of adding an SgNB if both a measurement condition and a traffic condition are satisfied, a mode is divided into the SN addition mode 4 or 5 based on the sequence in which the measurement condition and the traffic condition are applied.

Specifically, in the SN addition mode 4, whether a traffic state condition has been satisfied is identified after measurement is performed. A base station configures a measurement for an SN target in a terminal. If the configured measurement condition has been satisfied, the terminal performs a measurement and transmits an MR to the base station. Thereafter, the base station identifies a traffic state condition, and performs an SgNB addition if the traffic state is a threshold or more.

Specifically, in the SN addition mode 5, after identifying a traffic state condition, a base station performs a measurement configuration. The base station configures a terminal to perform a measurement when the traffic state condition is a first threshold or more, and releases a measurement configuration when the traffic condition is a second threshold or less. Furthermore, when an MR is received from the terminal, the base station identifies a traffic state condition based on a third threshold, and performs an SgNB addition if the traffic state condition is satisfied.

In order to reduce the delay of an SN addition procedure, configure a measurement prior to an SN addition, and receive an MR, a base station may perform a configuration so that a third threshold is greater than a first threshold (such a threshold, e.g. the first threshold and/or the third threshold, may be used as a criterion for identifying the above-described target, such as BO of a given protocol layer or traffic of a given bearer, for example). Furthermore, a base station may set a high traffic threshold so that an SN is not easily added for terminal low power based on communication network operation priority. In order to reduce the delay of an SN addition procedure when a large amount of data is generated, a base station may also set a high traffic threshold so that an SN is not easily added. Furthermore, a first threshold and second threshold for performing or releasing a measurement configuration may be set as the same value.

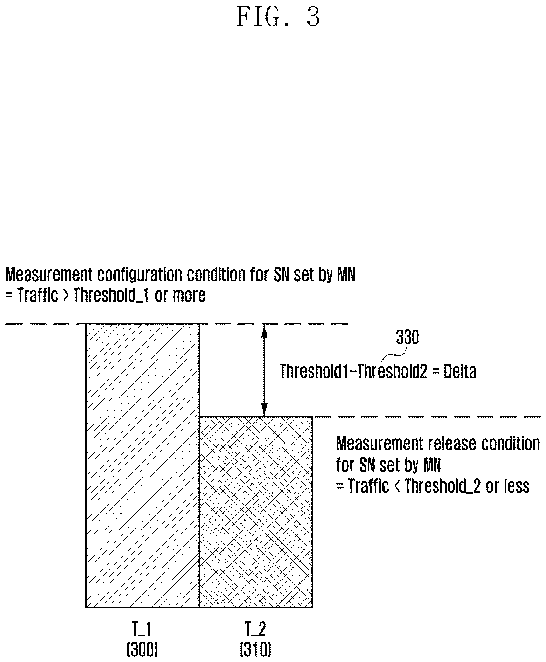

FIG. 3 is a diagram illustrating an example in which an MN sets a threshold, that is, a criterion for a traffic state, when the MN performs a measurement configuration and release on an SN according to an embodiment of the disclosure.

Measurement configuration and release are performed through an RRC reconfiguration. Accordingly, in order for a base station to not repeatedly perform an RRC reconfiguration for configuring a measurement in a terminal or releasing the measurement configuration, delta 330 may be present between a first threshold (i.e. Threshold1 or T_1) 300, that is, a condition for a measurement configuration, and a second threshold (i.e. Threshold2 or T_2) 310, that is, a condition for measurement configuration release. This may be represented as "first threshold - second threshold = delta."

A delta value includes a configuration method, which prevents an RRC reconfiguration for a base station to configure a measurement in a terminal or releasing the measurement configuration based on characteristics of network traffic (while monitoring a fluctuation) from frequently occurring. In one embodiment, a delta value may be set based on a weight factor value of a probability density function (PDF) variance value of a traffic change per unit time. Such a method is for preventing a ping-pong phenomenon in which an unnecessary SN addition and SN release are repeatedly performed by setting a higher delta value in order to compensate for such a fluctuation if a distribution value is high in terms of a probability distribution of a traffic change.

$$\text{delta} > Ax = \text{Variance of (traffic at UE within time window)} * \text{weight factor}$$

$$\ldots \text{Equation 1}$$

Such an Ax value may be set as a fixed value. Specifically, the Ax value may be identified based on a method of setting the Ax value as a fixed value based on characteristics of the previous traffic of a corresponding terminal, or a method of setting the Ax value as a fixed value based on characteristics of the previous traffic of a similar terminal class in a corresponding network, a method of setting the Ax value by dynamically updating a value based on characteristics of the previous traffic of a corresponding terminal or a method of setting the Ax value by updating a value based on characteristics of the previous traffic of a similar terminal class in a corresponding network and a combination of at least one of the methods.

Furthermore, a method for preventing a ping-pong phenomenon in which such an unnecessary SN addition (add) and SN release are repeatedly performed includes a method of setting a difference (i.e., delta) between the threshold (RSRP/RSRQ/SINR threshold) of measurement (e.g., NR B1 Event) configured for an SN Addition and the threshold (RSRP/RSRQ/SINR threshold) of measurement (e.g., NR A2 Event) configured for SN Release.

Another method for preventing a ping-pong phenomenon in which such an unnecessary SN addition (add) and SN release are repeatedly performed includes an operation of stopping a measurement (e.g., NR B 1 Event) configuration for an SN Addition in the situation in which an SN (e.g., SgNB) is not available.

An example of the situation in which an SN (e.g., SgNB) is not available includes a situation in which multiple S-RLFs occur within a given time. The example includes a method of preventing an SN Addition from being continuously attempted in such a situation. Further examples are as follows.

(1) An operation for an MN base station to stop a measurement (e.g., NR B 1 Event) configuration for an SN Addition for an SN (gNB or cell) that is identified as being not available because multiple error reports including an S-RLF occur for a given time or fully with respect to all terminals (or with respect to a terminal not a UE that has made an error report) within an MN cell,

(2) An operation for an MN base station to stop a measurement (e.g., NR B 1 Event) configuration for an SN Addition for an SN (gNB or cell) that is identified as being not available because multiple error reports including an S-RLF occur for a given time or fully with respect to only terminals of a given group that have reported an error,

(3) An operation for an MN base station to disable or delete a corresponding SN (gNB or cell) that is identified as being not available because multiple error reports including an S-RLF occur in a neighbor relation table (NRT) for an SN Addition for a given time,

(4) A method including a combination of each of the operations for an MN base station to perform a measurement (e.g., NR B 1 Event) configuration for an SN Addition or for an MN base station to prevent an SN Addition for a given time based on the PCID of a measurement report made by a terminal, or

(5) A method according to the combination of one or more methods (1) to (4) above.

The method for preventing the ping-pong phenomenon includes a method of differently setting the prevention or delay time of the above-described methods (1) to (4) SN Additions for each S-RLF type (including a PDCCH BLER error-based S-RLF, a failure upon NR RRC reconfig. with sync operation, an RACH failure (i.e., SR-RACH) other than an initial RACH, an RLC maximum retransmission number-exceeding failure, an SCG reconfig. failure, a security key failure, for example) and based on the number of corresponding S-RLFs occurred per time.

In an embodiment, a method of preventing an unnecessary SN Addition attempt includes an operation of determining and controlling:

a timer for disabling a corresponding SN/cell or whether to delete SN/cell information in an NRT;

a timer for delaying an SN Measurement configuration configured by an MN or whether to not continuously perform an SN measurement configuration; and

a timer setting value applied to an operation for an MN base station to prevent an SN Addition for a given time based on the PCID of a measurement report made by a terminal after the MN first configures SN measurement or whether to continuously neglect the MR of a terminal for a corresponding PCID.

An example in which an MN performs an SN addition based on the present traffic of the MN with respect to an SN addition operation has been described. An operation for an MN or SN to control SN release in the case of service for a small amount of data is described below.

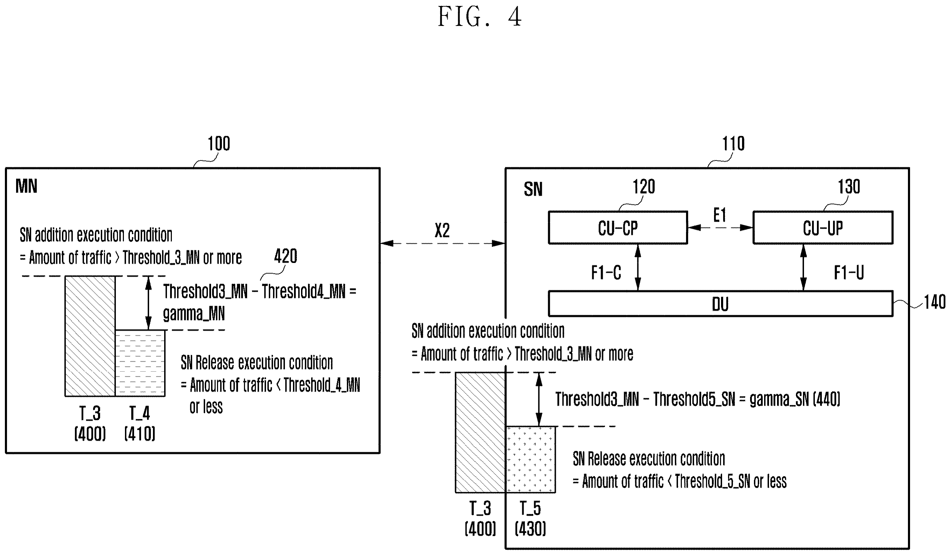

FIG. 4 is a diagram illustrating an example in which an SN addition and release condition is independently set for each NE in an EN-DC system according to an embodiment of the disclosure.

In an MN 100 of FIG. 4, a third threshold (i.e. Threshold3_MN or T_3) 400 may be set as an SN addition condition, and a fourth threshold (i.e. Threshold4_MN or T_4) 410 may be set as an SN release condition. In an SN 110, a third threshold 400 may be set as an SN addition condition, and a fifth threshold (i.e. Threshold5_SN or T_5) 430 may be set as an SN release condition. Such a configuration is merely an example. As described above, an MeNB and an SgNB are independent NEs. Accordingly, a measurement for an SN addition and a threshold related to the amount of traffic for SN addition operation activation may be independently configured for each base station. In such a case, a situation in which SN addition and SN release control are unnecessarily repeated may occur. In order to solve such a problem, there is a need for a procedure for an MeNB to transmit, to an SgNB, a threshold itself, that is, a criterion for enabling SN addition control, or information for setting a corresponding value through an X2 interface.

Furthermore, an SN release operation may be performed according to the following two methods because the traffic state of SN-terminated bearers can be identified by an SN. First, an SN may start and perform SN release. Second, an SN may perform the notification of a traffic state within the SN on an MN, and the MN may start and perform SN release based on the notification. Furthermore, a third threshold, that is, a traffic threshold for performing an SN addition, and a fourth threshold, that is, a traffic threshold for performing SN release, may be the same value. However, gamma (gamma _MN) 420 needs to be present between the third threshold and the fourth threshold so that a base station does not frequently perform an SN addition configuration and SN release configuration on a terminal. Similarly, gamma (gamma _SN) 440 may need to be present between the third threshold and the fifth threshold.

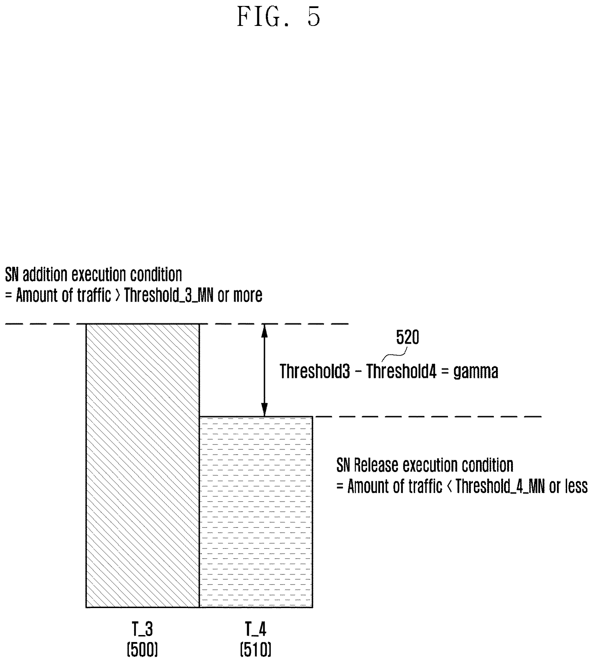

FIG. 5 is a diagram illustrating an example in which a traffic threshold for SN addition and release is set according to an embodiment of the disclosure.

A base station may set "third threshold 500 - fourth threshold 510 = gamma 520" in a terminal in order to not frequently perform an SN addition and SN release configuration. The gamma value may be set so that an RRC reconfiguration for a base station to configure or release a measurement in a terminal based on characteristics of network traffic (by monitoring a fluctuation does not frequently occur.

In one embodiment, gamma may be set based on a weight factor value of a PDF variance value of a traffic change per unit time.

$$\text{Gamma} > Bx = \text{Variance of (traffic at UE within time window)} * \text{weight factor}$$

$$\dots \text{Equation 2}$$

Such a Bx value may be set as a fixed value based on characteristics of the previous traffic of a corresponding terminal or may be set as a fixed value based on characteristics of the previous traffic of a similar terminal class in a corresponding network, which is a method of setting a given value, or may be set by updating a value based on characteristics of the previous traffic of a corresponding terminal or by updating a value based on characteristics of the previous traffic of a similar terminal class in a corresponding network, which is a method of dynamically setting the Bx value, and a combination of at least one of the methods.

As described above, SN release may be performed based on third threshold information, that is, a traffic threshold for performing an SN addition, and fourth threshold information, that is, a traffic threshold for performing SN release.

In an SN release operation, the traffic state of SN-terminated bearers can be identified by an SN. Accordingly, in the case of a method for an SN to start SN release, the SN needs to be previously aware of a third threshold, that is, a traffic amount threshold for performing an SN addition, which is set by an MN. To this end, the MN may transmit the third threshold (T_3 500) to the SN through an X2 interface. Alternatively, the MN may set a fourth threshold (T_3 510) and transmit the fourth threshold to the SN through the X2 interface. In such a method, it is difficult to identify an optimal gamma value because an MN cannot directly identify the present characteristic of SN traffic.

In the case of a method for an SN to perform the notification of a traffic state (regarding that the amount of traffic has dropped to an SN release reference value or less) within the SN on an MN and for the MN to start and perform SN release based on the notification, the SN requires third threshold information, that is, a traffic threshold for performing the SN addition configured by the MN. To this end, the MN may transmit the third threshold information to the SN through an X2 interface.

The above-described thresholds may be set as separate values for each terminal group. In one embodiment of the disclosure, a blind SN addition operation may be performed based on SPID information of an FWA terminal. Furthermore, a first threshold that is a threshold for the measurement configuration and release of the FWA terminal and a moving UE, a second threshold, a third threshold that is an SN addition function activation criterion threshold, a fourth threshold (in the case of an MN) that is an SN release criterion threshold, and a fifth threshold (in the case of an SN) that is an SN release criterion threshold may be set as separate values based on the SPID information. In the case of the FWA terminal and the moving UE, SN addition and SN release operations may be differently performed based on the setting values.

Such an SPID-based corresponding operation requires an operation for the HSS or MME of an operator core network to set RFSP of an EN-DC terminal. A base station inputs an SPID to each target frequency\band as a system parameter based on the corresponding RFSP. An MeNB obtains SPID information for each terminal group through the procedure. The MeNB may transmit the SPID information to an SgNB through an X2 interface when performing an SN addition operation or/and an SN modification operation.

An operation of performing SN addition sublation and SN release when QoS having higher priority is supported is described below. When QoS having higher priority, such as VoLTE, is supported, a resource for an MN link and high reliability can be stably supported through such an operation. Furthermore, VoLTE can be stably performed by securing sufficient uplink transmission power in the MN link and securing a radio resource for an MeNB through the SN addition sublation and SN release.

Specifically, the operation may be performed in the following case.

- If a QoS level, that is, a criterion for higher priority, is set and at least one bearer having the corresponding QoS or more is configured and activated.
- If a QoS level, that is, a criterion for higher priority, is set and N bearers or more having the corresponding QoS or more have been configured.
- If a QoS level, that is, a criterion for higher priority, is set, N bearers or more having the corresponding QoS or more are configured, and M or more of the N bearers have been activated.

The priority of such a QoS level may be identified based on a QoS class identifier (QCI). For example, if a QoS level, that is, a criterion for higher priority, is set as QCI = 1 (hereinafter referred to as a "criterion QoS level"), a bearer having a corresponding QoS or more (i.e., this may be a bearer whose priority according to a QCI is higher than 2) may be identified based on preset priority (e.g., if QCI = 1, priority may be 2) depending on the QCI. Furthermore, in an embodiment of the disclosure, the support of QoS having higher priority may be interpreted as a case where VoLTE is served (based on bearer QCI = 1).

In the case of at least one combination of the examples, in the EN-DC system, an SN addition disabling operation may be performed prior to an SN addition. An SN release operation may be performed after the SN addition.

Furthermore, in the EN-DC system, if VoLTE (QCI=1 bearer) has been set before an SN is added to a corresponding terminal or a criterion has been set so that an SN release operation is performed based on a QCI of the above newly configured data radio bearer (DRB), when such a condition is satisfied (because SN release cannot occur), an MeNB may control to release a measurement within an RAT. Alternatively, in the EN-DC system, if VoLTE (QCI=1 bearer) has been set before an SN is added to a corresponding terminal or a criterion has been set so that an SN release operation is performed based on a QCI of the above newly configured DRB, when the corresponding terminal is configured as a blind SN addition mode, an MeNB may configure an operation of adding an SN to be disabled in blind.

In the EN-DC system, if VoLTE (QCI=1 bearer) has been set after an SN is added to a corresponding terminal or a criterion has been set so that an SN release operation is performed based on a QCI of the above newly configured DRB, the following three methods may be performed.

First, SN release may be performed in such a manner that an MeNB transmits an SN RELEASE REQUEST message to an SgNB through an X2 interface. In this case, the MeNB performs a bearer type change from SCG bearers to MCG bearers prior to the SN release so that the continuity of UE service is guaranteed (by minimizing an interruption time).

The second method is a method for an SgNB to perform SN release by transmitting an SN RELEASE REQUIRED message to an MeNB through an X2 interface. In this case, the MeNB performs a bearer type change from SCG bearers to MCG bearers prior to the SN release so that the continuity of UE service is guaranteed (by minimizing an interruption time). Accordingly, an SgNB not having SCG traffic can also perform SN release by transmitting an SN RELEASE REQUIRED message to an MeNB through an X2 interface.

Third, an MeNB controls to guarantee the continuity of UE service (by minimizing an interruption time) by performing a bearer type change from SCG bearers to MCG bearers prior to SN release. Thereafter, when an SgNB not having SCG traffic transmits SgNB activity notification information to the MeNB through an X2 interface, the MeNB may transmit an SN RELEASE REQUEST message to the SgNB through the X2 interface so that the SgNB can perform SN release.

An operation for the SgNB to transmit the SgNB Activity Notification information through the X2 interface is an operation of reporting the User inactivity status of the SgNB to the MeNB per UE level per E-RAB (DRB) level in a level in which an Activity state is reported.

An MeNB may (Desired Activity Notification) configure a preferred level of the MeNB for corresponding SgNB Activity Notification reception. This is an operation of configuring whether an MeNB prefers a per UE level as a level in which the Activity state of SgNB Activity Notification is reported or whether an MeNB prefers to receive the reporting of the User inactivity status of an SgNB in a per E-RAB(DRB) level. Alternatively, an MeNB may perform a configuration that it does not want to receive SgNB Activity Notification information (None) from an SgNB with respect to the SgNB.

Such Desired Activity Notification may be configured as a Desired Activity Notification Level, that is, an option IE within an SgNB addition request or SgNB modification request.

An SgNB CU-CP configures an Activity Notification Level configured for a CU-UP in the same level (None (no transmission SgNB Activity Notification), per UE or Per Bearer) as a Desired Activity Notification Level preferred by an MeNB.

When SgNB Inactivity is triggered, an SgNB (CU-CP) needs to configure an SgNB Release operation so that only one of SgNB release required or SgNB Activity Notification is transmitted.

When SgNB Activity Notification is disabled or a Desired Activity Notification Level is set as a "None" level, an SgNB transmits "SgNB RELEASE REQUIRED" to X2 and does not transmit "SgNB Activity Notification" to X2.

When SgNB Activity Notification is enabled or a Desired Activity Notification Level is set as a per UE /per E-RAB level, an SgNB transmits "SgNB Activity Notification" to X2 and does not transmit "SGNB RELEASE REQUIRED" to X2.

A method of differentially setting user inactivity timers is described below.

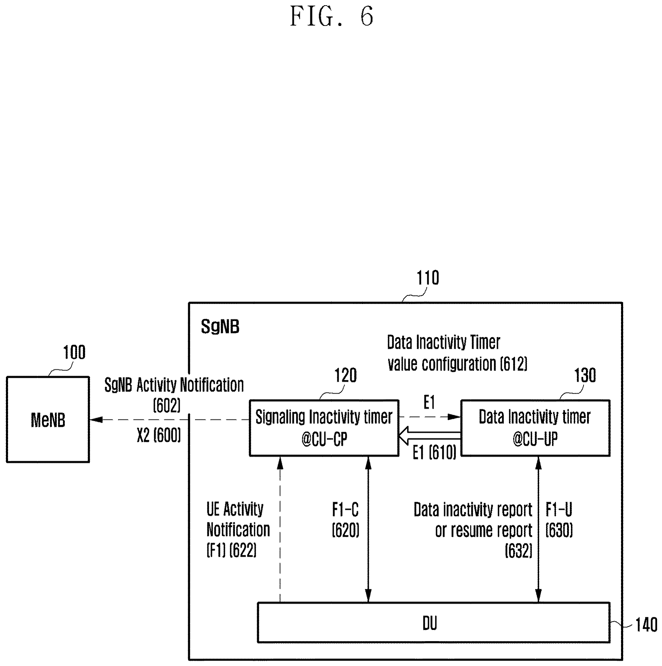

FIG. 6 is a diagram illustrating messages transmitted and received between NEs in an EN-DC system according to an embodiment of the disclosure.

Referring to FIG. 6, an interface between an MeNB 100 and an SgNB 110 is an X2 interface 600. An SgNB Activity Notification message 602 may be transmitted from the SgNB 110 to the MeNB 100. The SgNB 110 includes a CU-CP 120, a CU-UP 130 and a DU 140. A signal inactivity timer may be driven in the CU-CP 120. A data inactivity timer may be driven in the CU-UP 130. An E1 interface 610 may be defined between the CU-CP 120 and the CU-UP 130. The CU-CP 120 may transmit data inactivity timer value configuration information 612 to the CU-UP 130. An F1-C interface 620 is defined between the CU-CP 120 and the DU 140. The DU 140 may transmit a UE activity notification message 622 to the CU-CP 120. An F1-U interface 630 may be defined between the CU-UP 130 and the DU 140. The DU 140 and the CU-UP 130 may transmit and receive a data inactivity report and a resume report (interruption report) 632, respectively.

The disclosure proposes a method of setting and operating a control mode based on the selection of communication network operation priority (e.g., terminal low power, core network load minimization, and delay minimization) when the MN base station 100 and the SN base station 110 control an SN addition and SN release and RRC release.

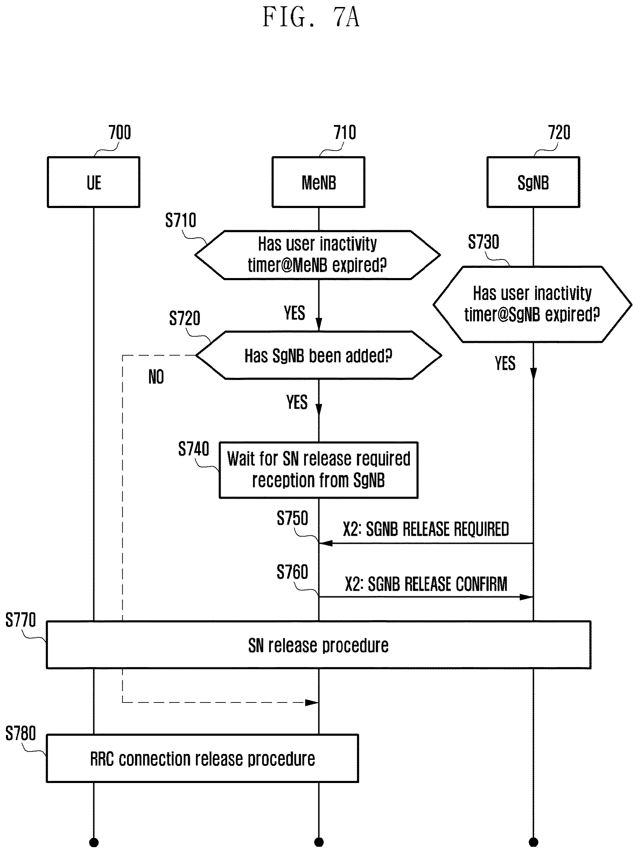

FIG. 7A is a diagram illustrating a control procedure for SN-initiated SN release according to an embodiment of the disclosure.

Referring to FIG. 7A, an MeNB 710 identifies whether the user inactivity timer of the MeNB has expired (at operation S710). If the user inactivity timer of the MeNB has expired, the MeNB 710 identifies whether an SgNB has been added (at operation S720). If the SgNB has been added, the MeNB 710 waits for the reception of an SN RELEASE REQUIRED message (SgNB RELEASE REQUIRED) from the SgNB 720 (at operation S740). Furthermore, the SgNB 720 identifies whether the user inactivity timer of the SgNB has expired (at operation S730). If the user inactivity timer of the SgNB has expired, the SgNB 720 transmits an SgNB RELEASE REQUIRED message to the MeNB 710 through an X2 interface (at operation S750). The MeNB 710 that has received the SgNB RELEASE REQUIRED message transmits an SgNB RELEASE CONFIRM message to the SgNB 720 through the X2 interface (at operation S760). After the SgNB RELEASE CONFIRM message is received, an SN release procedure is performed between the terminal 700 and the SgNB 720 and the MeNB 710 (at operation S770). If an SgNB has not been added at operation S720, the MeNB 710 and the terminal 700 perform an RRC release procedure because the user inactivity timer of the MeNB has expired (at operation S780).

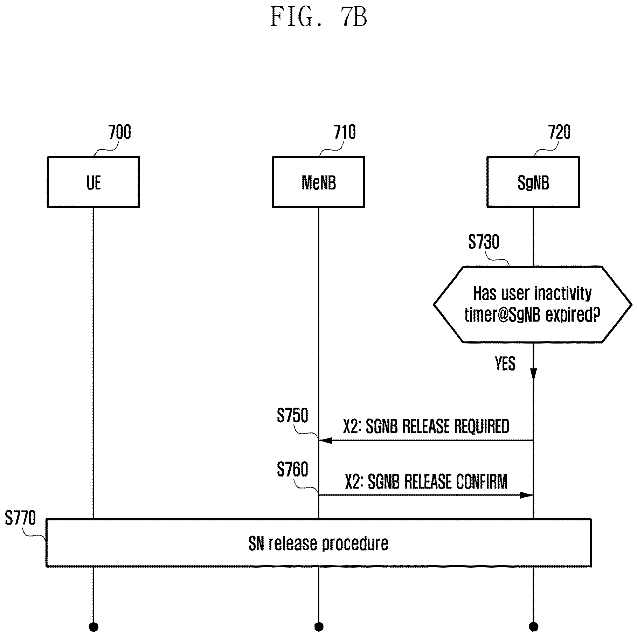

FIG. 7B is a diagram illustrating a procedure related to an SN during a control procedure for SN-initiated SN release according to an embodiment of the disclosure.

An SgNB 720 performs an SN-initiated SN release operation regardless of whether the inactivity timer of an MeNB 710 has expired because the SgNB cannot be aware of the inactivity operation of the MeNB 710. That is, when the inactivity timer of the SgNB 720 expires, the SgNB 720 transmits an SgNB RELEASE REQUIRED message to the MeNB 710 in order to perform an SN release procedure although the inactivity timer of the MeNB 710 has not expired (at operation S750). If the SgNB RELEASE REQUIRED message is received, the MeNB 710 transmits an SgNB RELEASE CONFIRM message to the SgNB 720 without a condition (at operation S760). According to the current technology, this means that when the MeNB 710 receives an SgNB RELEASE REQUIRED message transmitted by the SgNB 720, it identifies that the inactivity timer of the MeNB 710 has expired although the inactivity timer of the MeNB 710 has not expired, and performs SN release.

However, as described above, if SN release is performed regardless of the remaining quantity of the inactivity timer of the MeNB 710, a B1 measurement configuration (B1 means a case where the channel state of a neighbor cell within a RAT is better than a given threshold) is performed after the SN release, and thus a terminal performs a measurement report, an SgNB may be immediately added again and the inactivity timer of the SgNB may be started again from the beginning. In order to reduce signaling overhead attributable to such an unnecessary SN release and addition operation, the inactivity timer of an SgNB may be set as a given value. For example, if the inactivity timer of an SgNB is set to 10 seconds, SN release and addition do not occur during the at least 10 seconds. Accordingly, signaling overhead may be reduced if the inactivity timer of an SgNB is set as a value higher than a current value as described above. Furthermore, such a method has an advantage in that a waiting time for an SN procedure can be minimized if an SN addition is performed without a condition when the SN addition is performed.

If an SN addition is performed based on traffic (i.e., if an SN addition is performed based on BO), when the MeNB 710 corresponds to BO being a threshold or less, the MeNB 710 does not immediately perform the SN addition. Thereafter, an SN procedure is performed if the BO of the MeNB 710 exceeds a threshold or the MeNB 710 receives a measurement report for a candidate cell capable of an SN addition from a terminal.

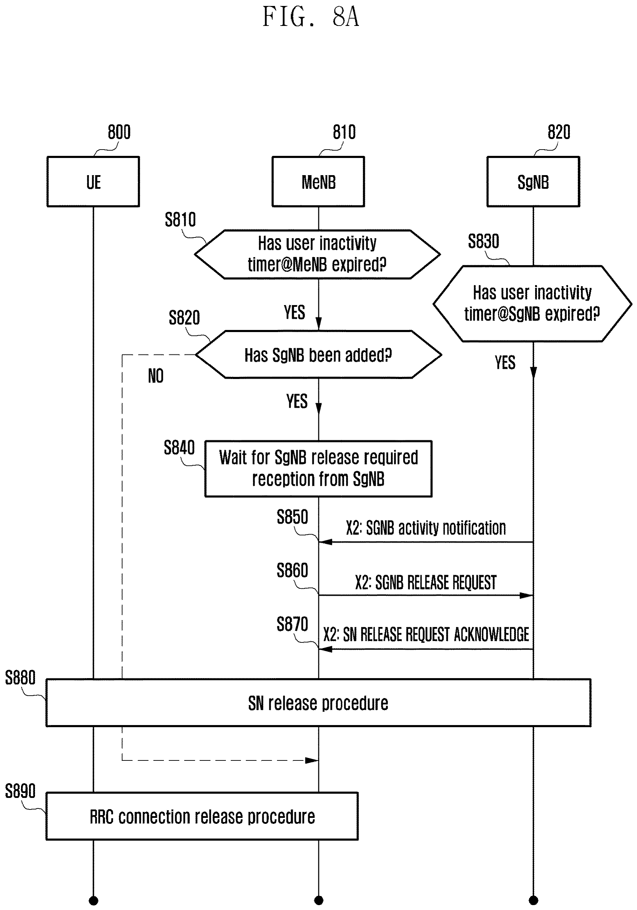

FIG. 8A is a diagram illustrating a control procedure for MN-initiated SN release according to an embodiment of the disclosure.

Referring to FIG. 8A, an MeNB 810 identifies whether the user inactivity timer of the MeNB has expired (at operation S810). If the user inactivity timer of the MeNB has expired, the MeNB 810 identifies whether an SgNB has been added (at operation S820). If an SgNB has been added, the MeNB 810 waits for the reception of an SN RELEASE REQUIRED message from the SgNB 820 (at operation S840). Furthermore, the SgNB 820 identifies whether the user inactivity timer of the SgNB has expired (at operation S830). If the timer has expired, the SgNB 820 transmits an SgNB activity notification message to the MeNB 810 through an X2 interface (at operation S850). The MeNB 810 that has received the SgNB activity notification message transmits an SgNB RELEASE REQUEST message to the SgNB 820 through an X2 interface (at operation S860). The SgNB 820 transmits an SN RELEASE REQUEST ACKNOWLEDGE message to the MeNB 810 (at operation S870). After the MeNB 810 receives the SN RELEASE REQUEST ACKNOWLEDGE message, an SN release procedure is performed between the terminal 800 and the SgNB 820 and the MeNB 810 (at operation S880). If an SgNB has not been added at operation S820, the MeNB 810 and a terminal 800 perform an RRC release procedure because the user inactivity timer of the MeNB has expired (at operation S890).

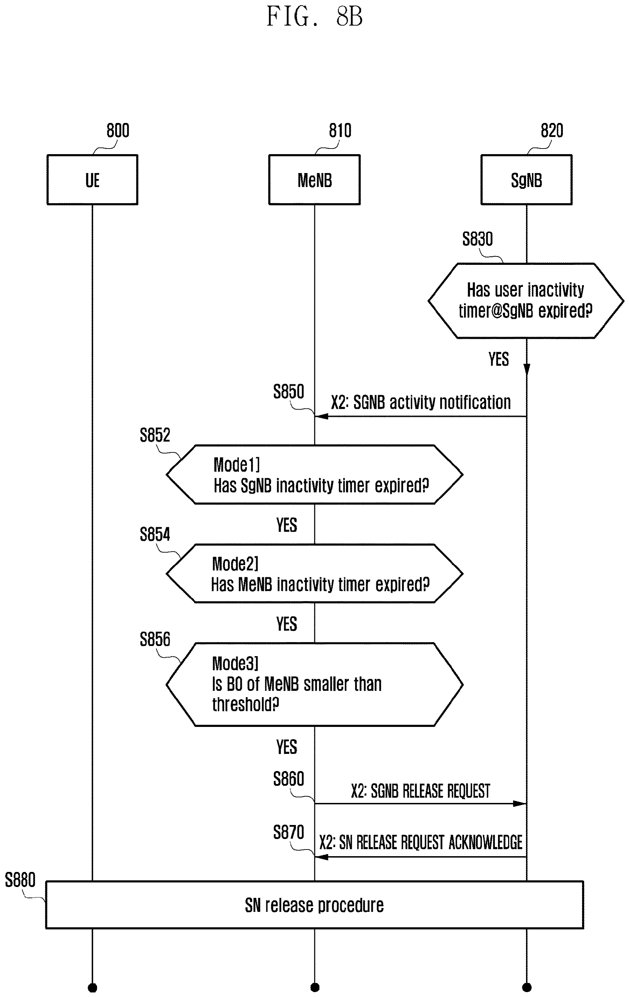

FIG. 8B is a diagram more specifically illustrating a procedure of an MN among control procedures for MN-initiated SN release according to an embodiment of the disclosure.

Referring to FIG. 8B, an SgNB 820 transmits an SgNB activity notification message to an MeNB 810 (at operation S850) if the inactivity timer of the SgNB has expired (at operation S830). Specifically, the SgNB 820 may transmit an SgNB activity notification message in the following cases.

- An SgNB activity notification message may be periodically transmitted. The message may include at least one of whether an SgNB inactivity timer for each UE has expired (active or not-active indication is included in the message) or whether an inactivity timer for each DRB has expired (active or not-active indication is included in the message) or whether an inactivity timer for each PDU session has expired (active or not-active indication is included in the message) or a combination of them.
- If all signaling and data inactivity timers for all types of traffic of a UE have expired, an SgNB activity notification message may be transmitted.
- If the expiration states of signaling and data inactivity timers for all types of traffic of a UE have changed (e.g., changed from Active to Not-active), an SgNB activity notification message may be transmitted.
- If at least one DRB inactivity timer has expired (including Active or Not active indication), an SgNB activity notification message may be transmitted.
- If the expiration state of at least one DRB inactivity timer has changed, an SGNB activity notification message may be transmitted. In this case, an Active or Not active indication may be included in the message.
- If at least N DRB inactivity timer has expired (including Active or Not active indication), an SgNB activity notification message may be transmitted. In this case, the N value may be preset or predetermined.
- If the expiration state of at least N DRB inactivity timer has changed, an SGNB activity notification message may be transmitted. In this case, an Active or Not active indication may be included in the message. In this case, the N value may be preset or predetermined.
- If an inactivity timer for at least one PDU session has expired (including an Active or Not active indication), an SgNB activity notification message may be transmitted.
- If the expiration state of an inactivity timer for at least one PDU session has changed, an SgNB activity notification message may be transmitted. In this case, an Active or Not active indication may be included in the message.
- If the inactivity timer of at least N PDU session has expired (including an Active or Not active indication), an SgNB activity notification message may be transmitted. In this case, the N value may be preset or predetermined.
- If the expiration state of an inactivity timer for at least N PDU session has changed, an SGNB activity notification message may be transmitted. In this case, an Active or Not active indication may be included in the message. In this case, the N value may be preset or predetermined.

The MeNB 810 identifies whether to perform an MN-initiated SN release operation based on the received SgNB activity notification information. Specifically, the MeNB 810 may identify whether to perform an SN release operation based on whether an SgNB inactivity timer has expires (at operation S852) and/or whether an MeNB inactivity timer has expired (at operation S854) and/or a result of a comparison between the BO of the MeNB and a threshold (at operation S856).

In one embodiment, although the SgNB inactivity timer has already expired, the MeNB 810 may maintain an SN connection until the MeNB inactivity timer expires. This means that the MeNB does not perform an SN release request. Thereafter, the MeNB 810 performs an MN-initiated SN release operation when the MeNB inactivity timer expires (at operation S860), and may perform the RRC release of an EN-DC terminal. In this case, the MeNB 810 may perform a bearer type change from an SN terminated SCG bearer to an MN-terminated MCG bearer, which needs to be performed prior to SN release. Alternatively, the MeNB 810 does not perform a bearer type change from an SN terminated SCG bearer to an MN-terminated MCG bearer, which needs to be performed prior to SN release, but performs an RRC release operation on an EN-DC terminal and immediately performs a procedure of deleting all of UE bearer configurations and UE context including the SN terminated SCG bearer. Such a UE context deletion procedure may be performed on an S1 interface.

In another embodiment, if the SgNB inactivity timer has expired (at operation S852), the MeNB 810 may immediately transmit an SN release request message. Thereafter, when the BO of the MeNB becomes a threshold or less, the MeNB 810 may perform an MN-initiated SN release procedure.

In another embodiment, although the SgNB inactivity timer has already expired, if the BO of the MeNB 810 is greater than a threshold (at operations S852, S856), the MeNB 810 may maintain an SN connection. That is, the MeNB 810 may not perform an SN release request. Thereafter, when the BO of the MeNB becomes a threshold or less, the MeNB 810 may initiate an MN-initiated SN release procedure.

As described above, four inactivity timers are present in an EN-DC system, and may be interchangeably used with the user inactivity timer. If all signaling inactivity timers and data inactivity timers on an eNB expire, an MeNB may be identified to be disabled. If both a signaling inactivity timer on the CU-CP of a gNB and a data inactivity timer on the DU of the gNB expire, an SgNB may be identified to be disabled. In this case, if both the MeNB and the SgNB are identified to be disabled, an RRC release condition is satisfied.

A method of configuring an MN-initiated SN release mode and an SN-initiated SN release mode is described below.

As the first method, SN release sublation mode control for a reduction in the control burden of a core network is described. An SN addition and release requires S1 for a bearer type change between an MME and an MeNB and the transmission and reception of core network control signaling. Accordingly, frequent SN additions and releases may become a control burden on a core network because they become a cause for frequent control signaling transmission and reception. Accordingly, an EN-DC system may be controlled to maintain the state in which an SN has been added after the terminal inactivity timer of an SgNB expires.

Instead, in order to reduce power consumption of a terminal by an SN, the SN (or SgNB) may activate a connected mode discontinuous reception (C-DRX) mode. C-DRX means that data is discontinuously received in an RRC connected state, and has an advantage in that it can reduce power consumption.

In this case, the CU-UP of the SgNB sets the same traffic inactivity timer value in the DU of the SgNB. Such a traffic inactivity timer is a timer for identifying a C-DRX start and PDCCH monitoring stop by a terminal for low power consumption of the terminal. The CU and the DU can mutually obtain whether corresponding timers have expired without a status report on the traffic inactivity timer through an operation of resetting a traffic inactivity timer value based on the last arrived packet. That is, the CU-CP and the DU can be aware of their traffic states (active or not active) using the same value as the setting value of the traffic inactivity timer although the CU-UP and the DU do not share traffic state information through an F1 interface. The SgNB DU supports a terminal low power operation by configuring C-DRX when the traffic inactivity timer expires.

In this case, if the SgNB inactivity timer expires, the SgNB CU transmits an SgNB activity notification message to the MeNB through an X2 interface. The SgNB activity notification message may include information indicating whether the SgNB is active. The SgNB inactivity timer may be understood as the user inactivity timer of FIG. 8A and 8B. In this case, what the SgNB inactivity timer expires means that both the signaling inactivity timer and data inactivity timer of the SgNB expire. Furthermore, although the SgNB inactivity timer does not expire, the SgNB may transmit an SgNB activity notification message to the MeNB through the X2 interface based on defined periodicity.

According to the current technology, when receiving an SgNB RELEASE REQUIRED message through an X2 interface, an MeNB may transmit only SgNB RELEASE CONFIRM to the SgNB. A REJECT message is not supported on the standard technology. Accordingly, an SN-initiated SN release cannot be rejected by an MN, and SN release needs to be performed. According to such an operation, an addition can be performed again after SN release. This may increase a control burden according to bearer configurations in a core network and an MeNB.

Furthermore, in the MN-initiated SN release mode, an MeNB may be aware of disabling information of an SgNB for each DRB, for each protocol data unit (PDU) session or for each UE with reference to an SgNB activity notification message transmitted through an X2 interface. Furthermore, if traffic is present in an SN, the MeNB can stably support service by maintaining an EN-DC terminal in an RRC connected mode.

Accordingly, performance of an EN-DC system based on performance required by a user and operator can be improved by providing the following mode configuration function for SN release to each base station.

Mode (1) Method of supporting an operation for an SgNB to transmit an SN-initiated SgNB RELEASE REQUIRED message when an SgNB inactivity timer expires.

Mode (2) Method for an MeNB to control MN-initiated SgNB release based on information of an SgNB activity notification message.

Mode (3) Method of supporting the two modes so that both an SgNB and an MeNB can request SgNB release.

One of the three modes may operate because an SgNB and an MeNB, that is, independent NEs, are independently configured and operated. If an operation is performed in Mode (3), SN release is possible when any one of an MN or an SN first requests the SN release.

First, an available operation when an SgNB performs SN release is described. An SgNB may initiate SN release if traffic is not present for each UE. Such an operation may be identified for each DRB, and may be based on the number of DRBs having traffic of a threshold or less or may be based on the number of DRBs corresponding to a given QCI or may be based on a combination of such identification criteria. If whether to initiate SN release is identified based on SgNB PDCP BO, only SN-initiated SN release may be possible if PDCP BO is a threshold or less. In this case, a bearer type change may be performed from an SCG bearer to an MCG bearer prior to the SN release. Furthermore, although traffic is present in an SgNB, the SN release may be conditionally performed. If the SgNB serves traffic of a threshold or less, the SN release may be performed after an SCG bearer is changed into an MCG bearer.

If an MeNB performs a bearer type change operation, a delay problem attributable to data forwarding may occur in the case of traffic having higher priority based on a QCI. Accordingly, control is performed by considering whether traffic is present for each DRB when an SN-terminated SCG bearer is changed into an MN-terminated MCG bearer. That is, in the case of a QCI having higher priority, such a point is considered when a bearer type change operation is performed in order to prevent performance degradation. For detailed example, a delay problem attributable to data forwarding may occur in the case of traffic having higher priority. Accordingly, if a bearer type change operation is longer than required delay of the corresponding QCI, based on a QCI based on whether traffic is present for each DRB, an MeNB may postpone an SN release procedure accompanied by a bearer type change until the inactivity timer of a corresponding QCI bearer expires, may update SgNB activity notification information, may identify whether to perform SN release control, and may operate.

Second, an available operation when an MeNB performs SN release is described. The above-described operation method may be performed when an SN-terminated SCG bearer is changed into an MN-terminated MCG bearer. Furthermore, SN release may be initiated if traffic is not present when traffic is identified for each UE. Alternatively, an MeNB may initiate SN release based on the number of DRBs having traffic of a threshold or less as a result of an identification for each DRB or if a condition in which the number of DRBs corresponding to a pre-defined QCI is a threshold or less is satisfied.

Alternatively, even after an SgNB inactivity timer expires, an SN may be maintained without being released. This is a method capable of preventing a load of a core network (e.g., a signaling load of an S1 interface between an X2 interface and an MME and an eNB) by not performing a bearer type change operation. In such a case, an SgNB needs to attempt terminal low power consumption by operating in C-DRX.

A method of differentiating and setting user inactivity timers for each UE category is described below. For example, such a method may be used to differently set the inactivity timers of an FWA terminal and mobile terminal based on SPID information.

There is a need for an operation for the HSS or MME of an operator core network to set RFSP of an EN-DC terminal in order to perform an SPID-based operation. A base station inputs an SPID to each target frequency band as a system parameter based on corresponding RFSP. An MeNB obtains SPID information for each UE category (or for each terminal group) through the procedure. The MeNB may transmit the SPID information to an SgNB through an X2 interface when an SN addition operation and/or an SN modification operation is performed.

A method for each NE of an SgNB to configure a user inactivity timer is described below.

First, the CU-CP of an SgNB may configure an optimal inactivity timer for each UE, for each DRB or for each PDU session. Information for such an identification is present only in the CU-CP, and a CU-UP cannot be aware of such information. Accordingly, the CU-CP performs a corresponding configuration. In this case, the CU-CP identifies a timer setting value based on a UE category, service for each bearer or an activity notification level. Furthermore, the CU-UP performs a CU-UP timer configuration in such a manner that the CU-CP transmits the inactivity timer setting value to the CU-UP through an E1 interface.

An inactivity timer differentiation configuration may be performed for each UE category as follows. An inactivity timer may be configured for each DRB or for each UE category. The UE category may be divided into an FWA terminal and a common moving UE. Alternatively, such a division may be performed based on international mobile equipment identity/software version (IMEI/SV) or RSVP (SPID). An MeNB may transmit, to an SgNB, SPID IE information within cell group configuration information (CG-config Info) through the X2 interface when performing an SN addition (SGNB ADDITION REQUEST on the X2 interface) or/and an SN modification (SGNB MODIFICATION REQUEST on the X2 interface). A separate data inactivity timer may be configured in the CU-UP with respect to a corresponding terminal through such information.

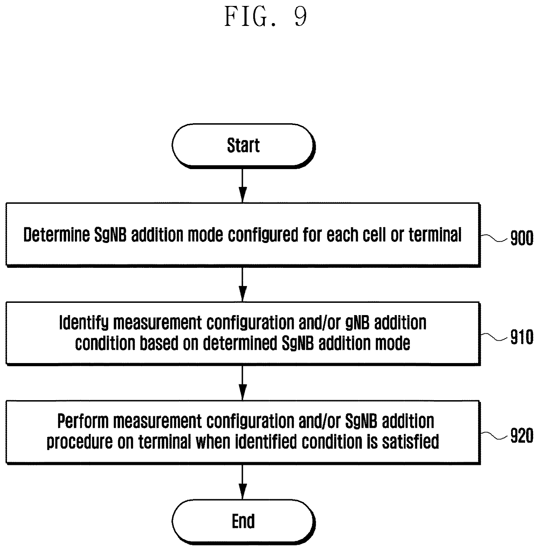

FIG. 9 is a diagram illustrating an example of an SN addition operation performed by an MeNB according to an embodiment of the disclosure.

Referring to FIG. 9, the MeNB checks an SgNB addition mode configured for each cell or for each UE category or for each terminal group (900). The SgNB addition mode is one of the modes in Table 1. The MeNB identifies a measurement configuration and/or gNB addition condition based on the checked SgNB addition mode (910). For example, in the case of Mode 1, a gNB may be added without a condition. In the case of Mode 2, a traffic threshold, that is, a criterion for adding a gNB, is checked. In the case of Mode 5, a first threshold for performing a measurement configuration, a second threshold for releasing a measurement configuration, and a third threshold for adding a gNB is checked. In this case, the traffic threshold may be identified based on BO for each protocol layer with reference to Table 2. Thereafter, the MeNB performs a measurement configuration and/or an SN addition procedure on a terminal if the identified condition has been satisfied (920).

Furthermore, the operations described in FIG. 9 may be disabled if VoLTE has been configured or if a QoS level having higher priority is set. Furthermore, all the operations described in FIG. 9 do not need to be sequentially performed in the sequence described in FIG. 9, and some of the operations may be omitted or the sequence of the operations may be changed and performed. Furthermore, the operations described in FIG. 9 may be combined with the contents described above in the disclosure and performed.

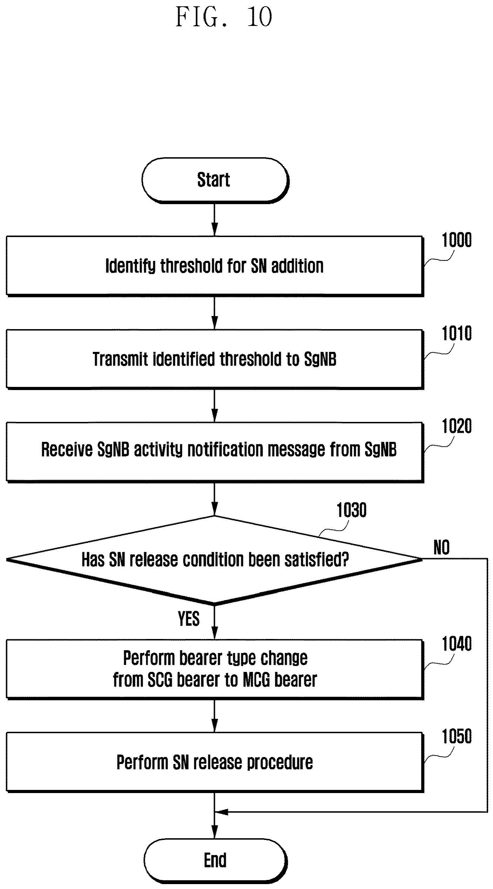

FIG. 10 is a diagram illustrating an example of an SN release operation performed by an MeNB according to an embodiment of the disclosure. Referring to FIG. 10, the MeNB may identify a traffic threshold (this may be called a third threshold) for performing an SN addition (1000), and may transmit the traffic threshold to an SgNB (1010). Furthermore, at this time, the MeNB may identify a traffic threshold (this may be called a fourth threshold) for performing SN release along with the traffic threshold for performing an SN addition, and may transmit the traffic threshold to the SgNB. Thereafter, the MeNB receives an SgNB activity notification message from the SgNB (1020), and identifies whether an SN release condition has been satisfied (1030). Whether such a condition has been satisfied may be identified based on the above-described criteria, such as information included in the SgNB activity notification message, the amount of traffic of the SgNB, the number of DRBs having traffic of a threshold or less in the SgNB, the number of DRBs corresponding to a given QCI, whether VoLTE has been configured, etc.

If the SN release condition has been satisfied, the MeNB may perform a bearer type change from a current SCG bearer into an MCG bearer (1040). If an SCG bearer is not currently present, such a procedure may not be performed. Thereafter, the MeNB may perform an SN release procedure by transmitting an SgNB RELEASE REQUEST message to the SgNB (1050). If the SN release condition has not been satisfied at operation 1030, the SN release procedure may be terminated, and thus the SgNB may be maintained. At this time, the SgNB may operate in the C-DRX mode.

All the operations described in FIG. 10 do not need to be sequentially performed in the sequence described in FIG. 10, and some of the operations may be omitted or the sequence of the operations may be changed and performed. Furthermore, the operations described in FIG. 10 may be combined with the contents described above in the disclosure and performed.

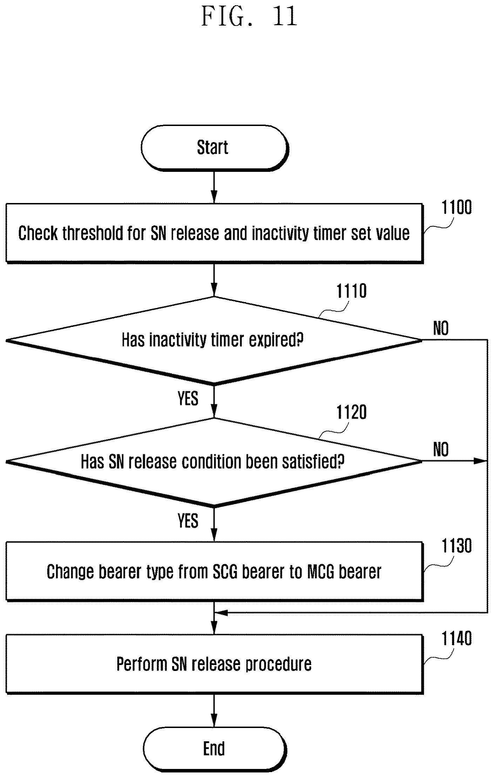

FIG. 11 is a diagram illustrating an example of an SN release operation performed by an SgNB according to an embodiment of the disclosure.

Referring to FIG. 11, the SgNB checks the setting value of a traffic threshold and an inactivity timer for SN release (1100). The traffic threshold may have been transmitted by an MeNB or may be a preset value. A setting value of a signaling inactivity timer for a CU-CP and a setting value of a data inactivity timer for a CU-UP may be set by the CU-CP for each UE, for each DRB or for each PDU session as the setting value of the inactivity timer. The CU-CP may transmit the checked data inactivity timer value to the CU-UP. If at least one of (or both) the values of the signaling inactivity timer and the data inactivity timer expire based on the checked value (1110), the SgNB identifies whether an SN release condition has been satisfied (1120). Whether such a condition is satisfied may be identified based on the above-described criterion, such as information included in an SgNB activity notification message, the amount of traffic of the SgNB, the number of DRBs having traffic of a threshold or less in the SgNB, the number of DRBs corresponding to a given QCI, or whether VoLTE has been configured. If the SN release condition has been satisfied, a bearer type change from an SCG bearer to an MCG bearer is performed (1130). Such an operation may not be performed if an SCG bearer is not present. Thereafter, the SgNB may perform an SN release procedure by transmitting an SgNB RELEASE REQUIRED message to an MeNB (1140).

If it is identified that the SN release condition has not been satisfied at operation 1120, the SgNB may be maintained. In this case, the SgNB may operate in the C-DRX mode.

All the operations described in FIG. 11 do not need to be sequentially performed in the sequence described in FIG. 11, and some of the operations may be omitted or the sequence of the operations may be changed and performed. Furthermore, the operations described in FIG. 11 may be combined with the contents described above in the disclosure and performed.

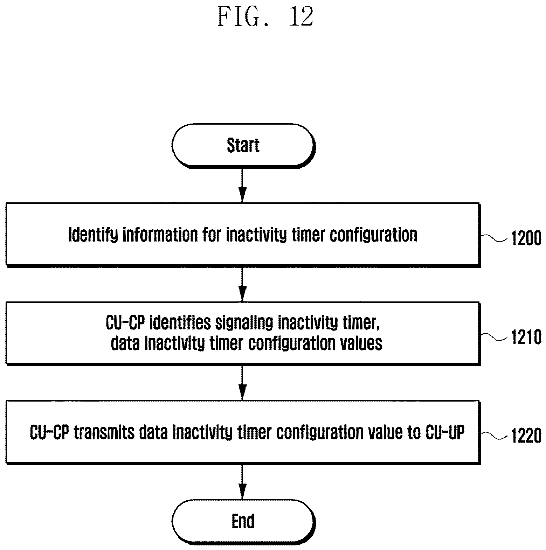

FIG. 12 is a diagram illustrating an example of an inactivity timer configuration operation performed by an SgNB according to an embodiment of the disclosure.

Referring to FIG. 12, the CU-CP of the SgNB identifies information for an inactivity timer configuration (at operation 1200). At least some of such information may have been transmitted by an MeNB. The CU-CP checks the setting value of a signaling inactivity timer and a data inactivity timer (at operation 1210). The CU-CP may check the setting value of the inactivity timer for each UE (or category), for each DRB or for each PDU session. In this case, the setting value of the inactivity timer may be checked based on a UE category, service for each bearer, or an activity notification level. Particularly, the UE category may be identified based on at least one of an SPID, RSVP and IMEI/SV. The CU-CP transmits the checked setting value of the data inactivity timer to the CU-UP of the SgNB (at operation 1220).

All the operations described in FIG. 12 do not need to be sequentially performed in the sequence described in FIG. 12, and some of the operations may be omitted or the sequence of the operations may be changed and performed. Furthermore, the operations described in FIG. 12 may be combined with the contents described above in the disclosure and performed.

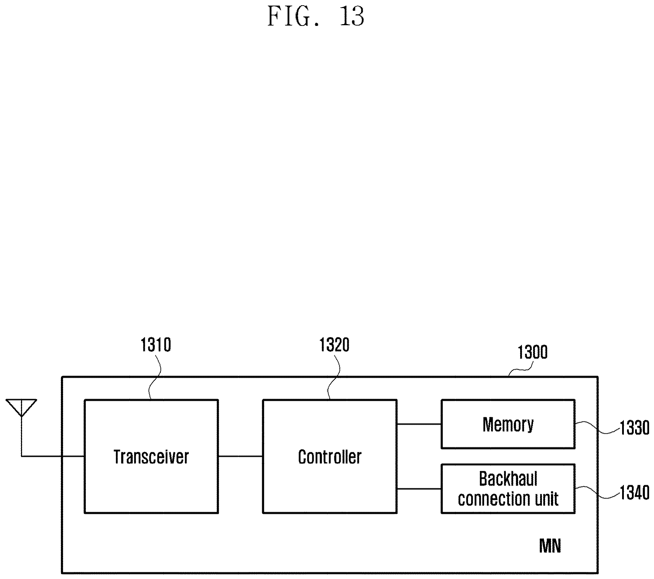

FIG. 13 is a block diagram illustrating the structure of an MeNB according to an embodiment of the disclosure.

Referring to FIG. 13, the MeNB 1300 may be configured with a transceiver 1310, a controller 1320, a memory 1330 and a backhaul connection unit 1340. The transceiver 1310 may transmit and receive signals to and from a terminal. The signal may include control information and data. To this end, the transceiver 1310 may be configured with a radio frequency (RF) transmitter for up-converting and amplifying the frequency of a transmitted signal and an RF receiver for low-noise-amplifying a received signal and down-converting the frequency of the signal. Furthermore, the transceiver 1310 may receive a signal through a radio channel, may output the signal to the controller 1320, and may transmit a signal output by the controller 1320 through a radio channel. The backhaul connection unit 1340 may transmit and receive signals to and from another base station including an SgNB and a core network. The signal may include control information and data.

The controller 1320 controls the transceiver 1310 and the backhaul connection unit 1340 so that the embodiments described in the disclosure can be performed. Specifically, the controller 1320 may transmit and receive the messages, described in the disclosure, to and from an SgNB through the backhaul connection unit 1340, may identify a threshold, and may identify whether to perform SN addition and release. Furthermore, the controller 1320 may use information stored in the memory 1330 for such an identification.

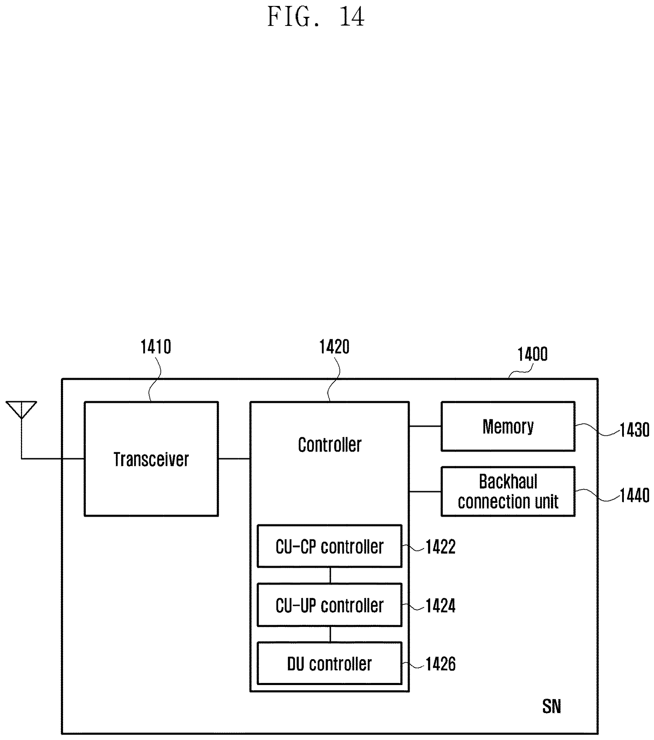

FIG. 14 is a block diagram illustrating the structure of an SgNB according to an embodiment of the disclosure.

Referring to FIG. 14, the SgNB 1400 may be configured with a transceiver 1410, a controller 1420 (e.g., at least one processor), a memory 1430 and a backhaul connection unit 1440. In this case, the controller 1420 may include a CU-CP controller 1422, a CU-UP controller 1424 and a DU controller 1426, and may control all CU-CPs, CU-UPs and DUs in a broad sense.

The transceiver 1410 may be configured with a radio frequency (RF) transmitter for up-converting and amplifying the frequency of a transmitted signal and an RF receiver for low-noise-amplifying a received signal and down-converting the frequency of the signal. Furthermore, the transceiver 1410 may receive a signal through a radio channel, may output the signal to the controller 1420, and may transmit a signal output by the controller 1420 through a radio channel. The backhaul connection unit 1440 may transmit and receive signals to and from another base station including an MeNB and a core network. The signal may include control information and data.

The controller 1420 controls the transceiver 1410 and the backhaul connection unit 1440 so that the embodiments described in the disclosure can be performed. Specifically, the controller 1420 may transmit and receive the messages, described in the disclosure, to and from an MeNB through the backhaul connection unit 1440, may identify a threshold, and may identify whether to perform SN addition and release. Furthermore, the controller 1420 may use information stored in the memory 1430 for such an identification.

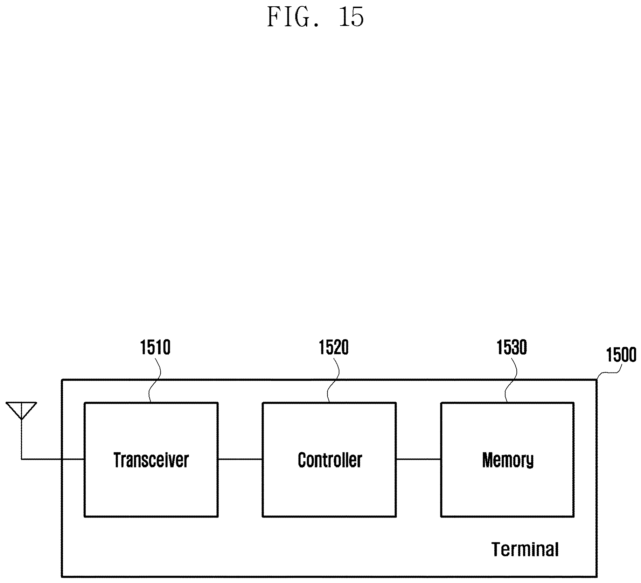

FIG. 15 is a block diagram illustrating the structure of a terminal according to an embodiment of the disclosure.

Referring to FIG. 15, the terminal 1500 may be configured with a transceiver 1510, a controller 1520 and a memory 1530. The transceiver 1510 may transmit and receive signals to and from a base station. Particularly, the transceiver may transmit and receive signals to and from an MeNB and an SgNB at the same time, and may support 4G communication and 5G communication systems. The signal may include control information and data. To this end, the transceiver 1510 may be configured with an RF transmitter for up-converting and amplifying the frequency of a transmitted signal and an RF receiver for low-noise-amplifying a received signal and down-converting the frequency of the signal. Furthermore, the transceiver 1510 may receive a signal through a radio channel, may output the signal to the controller 1520, and may transmit a signal output by the controller 1520 through a radio channel.

The controller 1520 controls the transceiver 1510 so that the embodiments described in the disclosure may be performed. Specifically, when a measurement configuration is received form an MeNB, the controller 1520 may transmit an MR to the MeNB, and may perform an SN addition and release and an RRC release procedure along with an MeNB and an SgNB. Furthermore, the controller 1520 may use information stored in the memory 1330 in order to perform such a procedure.

According to the disclosure, a load of a core network (e.g., control signaling overhead of an X2 or S 1 interface) can be prevented and an interruption time taken to perform a bearer type change, SN release and SN addition or an RRC release procedure can be reduced through an operation of sublating a bearer type change and an SN release operation. Furthermore, in the case of a dual connectivity terminal, a power consumption problem may occur in the terminal because the terminal has to monitor both the base station signals of an MN and an SN. In a low-capacity traffic support situation, such terminal power consumption can be reduced through an SN addition sublation and SN release operation. Furthermore, uplink transmission power of an MN link can be secured through such an operation. If service having QoS of higher priority, such as VoLTE, is supported, a resource for an MN link can be secured and reliable transmission can be performed.

The embodiments of the disclosure disclosed in the specification and drawings have suggested given examples in order to easily describe the technical contents of the disclosure and to help understanding of the disclosure, and are not intended to limit the scope of the disclosure. That is, it is evident to those skilled in the art to which the disclosure pertains that other modified examples based on technical spirit of the disclosure may be practiced. Furthermore, the embodiments may be combined and operated, if necessary.

According to the disclosure, a core network load (i.e., control signaling overhead of an X2, S1 interface) can be prevented and an interruption time occurring when a bearer type change, SN release and SN addition, or an RRC release procedure is performed can be reduced through an operation of sublating a bearer type change and an SN release operation. Furthermore, in the case of a dual connectivity terminal, a power consumption problem may occur in the terminal because the terminal needs to monitor both the base station signals of an MN and an SN. In a low-capacity traffic support situation, such terminal power consumption can be reduced through SN addition sublation and an SN release operation. Furthermore, uplink transmission power of an MN link can be secured through such an operation. If service including QoS having higher priority, such as VoLTE, is supported, a resource for an MN link can be secured and reliable transmission can be performed.

While the disclosure has been shown and described with reference to various embodiments thereof, it will be understood by those skilled in the art that various changes in form and details may be made therein without departing from the scope of the disclosure as defined by the appended claims.

**Claims**

1. A method performed by a first base station (100; 710; 810; 1300) for a dual connectivity operation in a communication system, the method comprising:

determining (900) an addition mode for a second base station (110; 720; 820; 1400) addition procedure based on at least on condition for adding a second base station, wherein the addition mode includes a first mode operating based on whether the second base station has a same location as the first base station, a second mode operating based on whether the second base station has the same location and a traffic condition monitored by the first base station is satisfied, a third mode operating based on whether the traffic condition is satisfied after a report for a measurement performed by the terminal is received, a fourth mode operating based on whether the report for the measurement is received after the traffic condition is satisfied; and
performing the second base station addition procedure based on the determined addition mode,
wherein, in case that the determined addition mode is the third mode or the fourth mode, the second base station addition procedure comprises: configuring the measurement for the terminal and selecting the second base station based on the measurement,
wherein configuring the measurement for the terminal comprises: identifying whether the second base station is available based on a number of radio link failures occurred for the second base station; and in case that the second base station is not available, stopping a measurement configuration for the terminal during a time, and wherein the time is determined based on the number of radio link failures within a given time.

2. The method of claim 1, wherein the traffic condition is determined to be satisfied based on:

whether a number of bearers including traffic above a predefined value is greater than a threshold,
whether an amount of input traffic or amount of output traffic per predefined time of one or a plurality of protocol layers is greater than a threshold, or
whether a buffer occupancy, BO, of a protocol layer is greater than a threshold.

3. The method of claim 2, wherein the plurality of the protocol layers include a packet data convergence protocol, PDCP, for a downlink traffic, and a on media access control, MAC, for an uplink traffic.

4. The method of claim 1, wherein the addition mode is determined based on a category of a terminal (700; 800; 1500).

5. The method of claim 1, wherein the second base station addition procedure further comprises:
receiving, from the terminal (700; 800; 1500), the report for the measurement based on the measurement configuration.

6. The method of claim 3, wherein, in case that the protocol layer is a PDCP for the downlink traffic, the BO is determined for each bearer.

7. A first base station (100; 710; 810; 1300) for a dual connectivity operation in a communication system, the first base station comprising:

a transceiver (1310) capable of transmitting and receiving signals to and from a terminal (700; 800; 1500);
a backhaul connection unit (1340) capable of transmitting and receiving signals to and from a second base station (110; 720; 820; 1400); and
at least one processor (1320) configured to:

determine an addition mode for the second base station addition procedure based on at least one condition for adding a second base station, wherein the addition mode includes a first mode operating based on whether the second base station has a same location as the first base station, a second mode operating based on whether the second base station has the same location and a traffic condition monitored by the first base station is satisfied, a third mode operating based on whether the traffic condition is satisfied after a report for a measurement performed by the terminal is received, a fourth mode operating based on whether the report for the measurement is received after the traffic condition is satisfied, and

perform the second base station addition procedure based on the determined addition mode,

wherein, in case that the determined addition mode is the third mode or the fourth mode, the second base station addition procedure comprises: configuring the measurement for the terminal and selecting the second base station based on the measurement,

wherein configuring the measurement for the terminal comprises: identifying whether the second base station is available based on a number of radio link failures occurred for the second base station; and in case that the second base station is not available, stop a measurement configuration for the terminal during a time, and

wherein the time is determined based on the number of radio link failures within a given time.

8. The first base station (100; 710; 810; 1300) of claim 7, wherein, the traffic condition is determined to be satisfied based on:

whether a number of bearers including traffic above a predefined value is greater than a threshold,

whether an amount of input traffic or amount of output traffic per predefined time of one or a plurality of protocol layers is greater than a threshold, or

whether a buffer occupancy, BO, of a protocol layer is greater than a threshold.

9. The first base station (100; 710; 810; 1300) of claim 8, wherein the plurality of the protocol layers include a packet data convergence protocol, PDCP, for a downlink traffic, and a media access control, MAC, for an uplink traffic.

10. The first base station (100; 710; 810; 1300) of claim 7, wherein the addition mode is determined based on a category of the terminal (700; 800; 1500).

11. The first base station (100; 710; 810; 1300) of claim 7, wherein, the at least one processor (1320) is further configured to:
receive, from the terminal (700; 800; 1500), the report for the measurement based on the measurement configuration.

12. The first base station (100; 710; 810; 1300) of claim 9, wherein, in case that the protocol layer is a PDCP for the downlink traffic, the BO is determined for each bearer.

**Patentansprüche**

1. Verfahren, durchgeführt durch eine erste Basisstation (100; 710; 810; 1300) für einen dualen Konnektivitätsvorgang in einem Kommunikationssystem, wobei das Verfahren Folgendes umfasst:

Bestimmen (900) eines Hinzufügungsmodus für einen Hinzufügungsvorgang einer zweiten Basisstation (110; 720; 820; 1400) basierend auf zumindest einem Zustand zum Hinzufügen einer zweiten Basisstation, wobei der Hinzufügungsmodus einen ersten Modus, der basierend darauf arbeitet, ob die zweite Basisstation einen gleichen Standort wie die erste Basisstation aufweist, einen zweiten Modus, der basierend darauf arbeitet, ob die zweite Basisstation den gleichen Standort aufweist und ein Verkehrszustand, der durch die erste Basisstation überwacht wird, erfüllt ist, einen dritten Modus, der basierend darauf arbeitet, ob der Verkehrszustand erfüllt ist, nachdem ein Bericht für eine Messung, die durch das Endgerät durchgeführt wird, empfangen ist, einen vierten Modus, der basierend darauf arbeitet, ob der Bericht für die Messung empfangen ist, nachdem der Verkehrszustand erfüllt ist, beinhaltet; und

Durchführen des Hinzufügungsvorgangs der zweiten Basisstation basierend auf dem bestimmten Hinzufügungsmodus,

wobei in dem Fall, dass der bestimmte Hinzufügungsmodus der dritte Modus oder der vierte Modus ist, der Hinzufügungsvorgang der zweiten Basisstation Folgendes umfasst: Konfigurieren der Messung für das Endgerät und Auswählen der zweiten Basisstation basierend auf der Messung,

wobei das Konfigurieren der Messung für das Endgerät Folgendes umfasst: Identifizieren, ob die zweite Basisstation verfügbar ist, basierend auf einer Anzahl an Funkverbindungsfehlern, die für die zweite Basisstation aufgetreten sind; und in dem Fall, dass die zweite Basisstation nicht verfügbar ist, Stoppen einer Messkonfiguration für das Endgerät während einer Zeit, und

wobei die Zeit basierend auf der Anzahl an Funkverbindungsfehlern innerhalb einer gegebenen Zeit bestimmt wird.

2. Verfahren nach Anspruch 1, wobei der Verkehrszustand basierend auf Folgendem als erfüllt bestimmt wird:

ob eine Anzahl an Trägern beinhaltend Verkehr über einem vordefinierten Wert größer als ein Schwellenwert ist,

ob eine Menge an Eingangsverkehr oder eine Menge an Ausgangsverkehr pro vordefinierter Zeit von einer oder einer Vielzahl von Protokollschichten größer als ein Schwellenwert ist, oder

ob eine Pufferbelegung, BO, einer Protokollschicht größer als ein Schwellenwert ist.

3. Verfahren nach Anspruch 2, wobei die Vielzahl der Protokollschichten ein Paketdatenkonvergenzprotokoll, PDCP, für einen Downlink-Verkehr und eine Medienzugriffskontrolle, MAC, für einen Uplink-Verkehr beinhaltet.

4. Verfahren nach Anspruch 1, wobei der Hinzufügungsmodus basierend auf einer Kategorie eines Endgeräts (700; 800; 1500) bestimmt wird.

5. Verfahren nach Anspruch 1, wobei der Hinzufügungsvorgang der zweiten Basisstation ferner Folgendes umfasst: Empfangen, von dem Endgerät (700; 800; 1500), des Berichts für die Messung basierend auf der Messkonfiguration.

6. Verfahren nach Anspruch 3, wobei in dem Fall, dass die Protokollschicht ein PDCP für den Downlink-Verkehr ist, die BO für jeden Träger bestimmt wird.

7. Erste Basisstation (100; 710; 810; 1300) für einen dualen Konnektivitätsbetrieb in einem Kommunikationssystem, wobei die erste Basisstation Folgendes umfasst:

einen Sendeempfänger (1310), der in der Lage ist, Signale zu und von einem Endgerät (700; 800; 1500) zu senden und zu empfangen;

eine Backhaul-Verbindungseinheit (1340), die in der Lage ist, Signale zu und von einer zweiten Basisstation (110; 720; 820; 1400) zu senden und zu empfangen; und

zumindest einen Prozessor (1320), der zu Folgendem konfiguriert ist:

Bestimmen eines Hinzufügungsmodus für den Hinzufügungsvorgang der zweiten Basisstation basierend auf zumindest einem Zustand zum Hinzufügen einer zweiten Basisstation, wobei der Hinzufügungsmodus einen ersten Modus, der basierend darauf arbeitet, ob die zweite Basisstation einen gleichen Standort wie die erste Basisstation aufweist, einen zweiten Modus, der basierend darauf arbeitet, ob die zweite Basisstation den gleichen Standort aufweist und ein Verkehrszustand, der durch die erste Basisstation überwacht wird, erfüllt ist, einen dritten Modus, der basierend darauf arbeitet, ob der Verkehrszustand erfüllt ist, nachdem ein Bericht für eine Messung, die durch das Endgerät durchgeführt wird, empfangen ist, einen vierten Modus, der basierend darauf arbeitet, ob der Bericht für die Messung empfangen ist, nachdem die Verkehrsbedingung erfüllt ist, beinhaltet, und

Durchführen des Hinzufügungsvorgangs der zweiten Basisstation basierend auf dem bestimmten Hinzufügungsmodus,

wobei in dem Fall, dass der bestimmte Hinzufügungsmodus der dritte Modus oder der vierte Modus ist, der Hinzufügungsvorgang der zweiten Basisstation Folgendes umfasst: Konfigurieren der Messung für das Endgerät und Auswählen der zweiten Basisstation basierend auf der Messung,

wobei das Konfigurieren der Messung für das Endgerät Folgendes umfasst: Identifizieren, ob die zweite Basisstation verfügbar ist, basierend auf einer Anzahl an Funkverbindungsfehlern, die für die zweite Basisstation aufgetreten sind; und in dem Fall, dass die zweite Basisstation nicht verfügbar ist, Stoppen einer Messkonfiguration für das Endgerät während einer Zeit, und

wobei die Zeit basierend auf der Anzahl an Funkverbindungsfehlern innerhalb einer gegebenen Zeit bestimmt wird.

**8.** Erste Basisstation (100; 710; 810; 1300) nach Anspruch 7, wobei der Verkehrszustand basierend auf Folgendem als erfüllt bestimmt wird:

ob eine Anzahl an Trägern beinhaltend Verkehr über einem vordefinierten Wert größer als ein Schwellenwert ist,
ob eine Menge an Eingangsverkehr oder eine Menge an Ausgangsverkehr pro vordefinierter Zeit von einer oder einer Vielzahl von Protokollschichten größer als ein Schwellenwert ist, oder
ob eine Pufferbelegung, BO, einer Protokollschicht größer als ein Schwellenwert ist.

**9.** Erste Basisstation (100; 710; 810; 1300) nach Anspruch 8, wobei die Vielzahl der Protokollschichten ein Paketdatenkonvergenzprotokoll, PDCP, für einen Downlink-Verkehr und eine Medienzugriffskontrolle, MAC, für einen Uplink-Verkehr beinhaltet.

**10.** Erste Basisstation (100; 710; 810; 1300) nach Anspruch 7, wobei der Hinzufügungsmodus basierend auf einer Kategorie des Endgeräts (700; 800; 1500) bestimmt wird.

**11.** Erste Basisstation (100; 710; 810; 1300) nach Anspruch 7, wobei der zumindest eine Prozessor (1320) ferner zu Folgendem konfiguriert ist:
Empfangen, von dem Endgerät (700; 800; 1500) des Berichts für die Messung basierend auf der Messkonfiguration.

**12.** Erste Basisstation (100; 710; 810; 1300) nach Anspruch 9, wobei in dem Fall, dass die Protokollschicht ein PDCP für den Downlink-Verkehr ist, die BO für jeden Träger bestimmt wird.

**Revendications**

**1.** Procédé, réalisé par
une première station de base (100 ; 710 ; 810 ; 1300) pour une opération de double connectivité dans un système de communication, le procédé comprenant :

la détermination (900) d'un mode d'ajout pour une procédure d'ajout de seconde station de base (110 ; 720 ; 820 ; 1400) sur la base d'au moins une condition pour l'ajout d'une seconde station de base, ledit mode d'ajout comprenant un premier mode fonctionnant sur la base que la seconde la station de base comporte ou non le même emplacement que la première station de base, un deuxième mode fonctionnant sur la base que la seconde station de base comporte ou non le même emplacement et qu'une condition de trafic surveillée par la première station de base est ou non satisfaite, un troisième mode fonctionnant sur la base que la condition de trafic est ou non satisfaite après la réception d'un rapport pour une mesure réalisée par le terminal, un quatrième mode fonctionnant sur la base que le rapport pour la mesure est reçu ou non après que la condition de trafic est satisfaite ; et
la réalisation de la procédure d'ajout de seconde station de base sur la base du mode d'ajout déterminé,
dans le cas où le mode d'ajout déterminé est le troisième mode ou le quatrième mode, ladite procédure d'ajout de seconde station de base comprenant : la configuration de la mesure pour le terminal et la sélection de la seconde station de base sur la base de la mesure,
ladite configuration de la mesure pour le terminal comprenant : l'identification pour savoir si la seconde station de base est disponible sur la base d'un nombre de défaillances de liaison radio survenues pour la seconde station de base ; et dans le cas où la seconde station de base n'est pas disponible, l'arrêt d'une configuration de mesure pour le terminal durant un temps, et
ledit temps étant déterminé sur la base du nombre de défaillances de liaison radio au cours d'un temps donné.

**2.** Procédé de la revendication 1, ladite condition de trafic étant déterminée comme étant satisfaite sur la base que :

un nombre de porteuses comprenant un trafic supérieur à une valeur prédéfinie est supérieur ou non à un seuil,
une quantité de trafic d'entrée ou une quantité de trafic de sortie par temps prédéfini d'une couche de protocole ou d'une pluralité de couches de protocole est supérieure ou non à un seuil, ou
une occupation de tampon, BO, d'une couche de protocole est supérieure ou non à un seuil.

**3.** Procédé de la revendication 2, ladite pluralité de couches de protocole comprenant un protocole de convergence de données par paquets, PDCP, pour un trafic de liaison descendante, et une commande d'accès sur support, MAC, pour un trafic de liaison montante.

**4.** Procédé de la revendication 1, ledit mode d'ajout étant déterminé sur la base d'une catégorie d'un terminal (700 ; 800 ; 1500).

**5.** Procédé de la revendication 1, ladite procédure d'ajout de seconde station de base comprenant en outre : la réception, en provenance du terminal (700 ; 800 ; 1500), du rapport pour la mesure sur la base de la configuration de mesure.

**6.** Procédé de la revendication 3, dans le cas où la couche de protocole est un PDCP pour le trafic de liaison descendante, ledit BO étant déterminé pour chaque porteuse.

**7.** Première station de base (100 ; 710 ; 810 ; 1300) pour une opération de double connectivité dans un système de communication, la première station de base comprenant :

un émetteur-récepteur (1310) capable d'émettre et de recevoir des signaux vers et en provenance d'un terminal (700 ; 800 ; 1500) ; et
une unité de connexion de liaison terrestre (1340) capable d'émettre et de recevoir des signaux vers et en provenance d'une seconde station de base (110 ; 720 ; 820 ; 1400) ; et
au moins un processeur (1320) configuré pour :

déterminer un mode d'ajout pour la procédure d'ajout de seconde station de base sur la base d'au moins une condition pour l'ajout d'une seconde station de base, ledit mode d'ajout comprenant un premier mode fonctionnant sur la base que la seconde station de base comporte ou non le même emplacement que la première station de base, un deuxième mode fonctionnant sur la base que la seconde station de base comporte ou non le même emplacement et qu'une condition de trafic surveillée par la première station de base est ou non satisfaite, un troisième mode fonctionnant sur la base que la condition de trafic est ou non satisfaite après qu'un rapport pour une mesure réalisée par le terminal est reçu, un quatrième mode fonctionnant sur la base que le rapport pour la mesure est reçu ou non après que les conditions de circulation sont satisfaites, et
réaliser la procédure d'ajout de seconde station de base sur la base du mode d'ajout déterminé,
dans le cas où le mode d'ajout déterminé est le troisième mode ou le quatrième mode, ladite procédure d'ajout de seconde station de base comprenant : la configuration de la mesure pour le terminal et la sélection de la seconde station de base sur la base de la mesure,
ladite configuration de la mesure pour le terminal comprenant : l'identification pour savoir si la seconde station est disponible sur la base d'un nombre de défaillances de liaison radio survenues pour la seconde station de base ; et dans le cas où la seconde station de base n'est pas disponible, arrêter une configuration de mesure pour le terminal durant un temps, et
ledit temps étant déterminé sur la base du nombre de défaillances de liaison radio au cours d'un temps donné.

**8.** Première station de base (100 ; 710 ; 810 ; 1300) de la revendication 7, ladite condition de trafic étant déterminée comme étant satisfaite sur la base que :

un nombre de porteuses comprenant un trafic supérieur à une valeur prédéfinie est supérieur ou non à un seuil,
une quantité de trafic d'entrée ou une quantité de trafic de sortie par temps prédéfini d'une couche de protocole ou d'une pluralité de couches de protocole est supérieure ou non à un seuil, ou
une occupation de tampon, BO, d'une couche de protocole est supérieure ou non à un seuil.

**9.** Première station de base (100 ; 710 ; 810 ; 1300) de la revendication 8, ladite pluralité de couches de protocole comprenant un protocole de convergence de données par paquets, PDCP, pour un trafic de liaison descendante, et une commande d'accès au support, MAC, pour un trafic de liaison montante.

**10.** Première station de base (100 ; 710 ; 810 ; 1300) de la revendication 7, ledit mode d'ajout étant déterminé sur la base d'une catégorie du terminal (700 ; 800 ; 1500).

**11.** Première station de base (100 ; 710 ; 810 ; 1300) de la revendication 7, ledit au moins un processeur (1320) étant en outre configuré pour :
recevoir, en provenance du terminal (700 ; 800 ; 1500), le rapport pour la mesure sur la base de la configuration de mesure.

12. Première station de base (100 ; 710 ; 810 ; 1300) de la revendication 9, dans le cas où la couche de protocole est un PDCP pour le trafic de liaison descendante, ledit BO étant déterminé pour chaque support.

FIG. 1

FIG. 2

# FIG. 3

Measurement configuration condition for SN set by MN
= Traffic > Threshold_1 or more

330

Threshold1-Threshold2 = Delta

Measurement release condition
for SN set by MN
= Traffic < Threshold_2 or less

T_1
(300)

T_2
(310)

# FIG. 4

**100**

**MN**

SN addition execution condition
= Amount of traffic > Threshold_3_MN or more

**420**

Threshold3_MN – Threshold4_MN = gamma_MN

SN Release execution condition
= Amount of traffic < Threshold_4_MN or less

T_3
(400)

T_4
(410)

**110**

**SN**

**120** CU-CP

**E1**

**130** CU-UP

F1-C

F1-U

**DU** **140**

**X2**

SN addition execution condition
= Amount of traffic > Threshold_3_MN or more

Threshold3_MN – Threshold5_SN = gamma_SN (440)

SN Release execution condition
= Amount of traffic < Threshold_5_SN or less

T_3
(400)

T_5
(430)

# FIG. 5

SN addition execution condition
= Amount of traffic > Threshold_3_MN or more

520

Threshold3 − Threshold4 = gamma

SN Release execution condition
= Amount of traffic < Threshold_4_MN or less

T_3
(500)

T_4
(510)

FIG. 6

# FIG. 7A

# FIG. 7B

# FIG. 8A

800

**UE**

810

**MeNB**

820

**SgNB**

S810 — Has user inactivity timer@MeNB expired?

S830 — Has user inactivity timer@SgNB expired?

YES

S820 — Has SgNB been added?

NO

YES

S840 — Wait for SgNB release required reception from SgNB

YES

S850 — X2: SGNB activity notification

S860 — X2: SGNB RELEASE REQUEST

S870 — X2: SN RELEASE REQUEST ACKNOWLEDGE

S880 — SN release procedure

S890 — RRC connection release procedure

33

# FIG. 8B

FIG. 9

```
                    ┌──────────────┐
                    │    Start     │
                    └──────────────┘
                            │
                            ▼
┌──────────────────────────────────────────────────────┐
│ Determine SgNB addition mode configured for each cell or terminal │──── 900
└──────────────────────────────────────────────────────┘
                            │
                            ▼
┌──────────────────────────────────────────────────────┐
│ Identify measurement configuration and/or gNB addition │
│ condition based on determined SgNB addition mode        │──── 910
└──────────────────────────────────────────────────────┘
                            │
                            ▼
┌──────────────────────────────────────────────────────┐
│ Perform measurement configuration and/or SgNB addition │
│ procedure on terminal when identified condition is satisfied │──── 920
└──────────────────────────────────────────────────────┘
                            │
                            ▼
                    ┌──────────────┐
                    │     End      │
                    └──────────────┘
```

# FIG. 10

```
                    Start

          ┌─────────────────────────────┐
          │  Identify threshold for SN addition │  1000
          └─────────────────────────────┘

          ┌─────────────────────────────┐
          │  Transmit identified threshold to SgNB │  1010
          └─────────────────────────────┘

          ┌───────────────────────────────────────┐
          │  Receive SgNB activity notification message from SgNB │  1020
          └───────────────────────────────────────┘

                              1030
          ◇ Has SN release condition been satisfied? ◇      NO
                      YES │

          ┌─────────────────────────────┐
          │  Perform bearer type change
          │  from SCG bearer to MCG bearer │  1040
          └─────────────────────────────┘

          ┌─────────────────────────────┐
          │  Perform SN release procedure │  1050
          └─────────────────────────────┘

                     End
```

# FIG. 11

```
                        ┌──────────────┐
                        │    Start     │
                        └──────┬───────┘
                               │
                               ▼
        ┌──────────────────────────────────────────────┐  1100
        │ Check threshold for SN release and inactivity │
        │              timer set value                  │
        └──────────────────────┬───────────────────────┘
                               │
                               ▼                      1110
                      ◇ Has inactivity timer expired? ◇──── NO ───┐
                               │                                   │
                              YES                                  │
                               ▼                      1120         │
               ◇ Has SN release condition been satisfied? ◇── NO ─┤
                               │                                   │
                              YES                                  │
                               ▼                      1130         │
        ┌──────────────────────────────────────────────┐          │
        │ Change bearer type from SCG bearer to MCG     │          │
        │                   bearer                      │          │
        └──────────────────────┬───────────────────────┘          │
                               │◄─────────────────────────────────┘
                               ▼                      1140
        ┌──────────────────────────────────────────────┐
        │          Perform SN release procedure         │
        └──────────────────────┬───────────────────────┘
                               │
                               ▼
                        ┌──────────────┐
                        │     End      │
                        └──────────────┘
```

FIG. 12

Start

Identify information for inactivity timer configuration ~ 1200

CU-CP identifies signaling inactivity timer,
data inactivity timer configuration values ~ 1210

CU-CP transmits data inactivity timer configuration value to CU-UP ~ 1220

End

FIG. 13

# FIG. 14

Transceiver — 1410

Controller — 1420

Memory — 1430

Backhaul connection unit — 1440

CU-CP controller — 1422

CU-UP controller — 1424

DU controller — 1426

1400

SN

FIG. 15

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2016071311 A1
- US 2015043492 A1
- US 2016338039 A1

**Non-patent literature cited in the description**

- Signaling Impact over S1/Xn. *3GPP TSG RAN WG3#81bis*, http://www.3gpp.org/ftp/tsg_ran/WG3_lu/TSGR3_81bis/Docs
- NeedForGap capability supported for inter-RAT measurement to NR frequency before EN-DC configuration. *3GPP TSG RAN WG2 Meeting #102*, http://www.3gpp.org/ftp/Meetings%SF3GPP% SFSYNC/RAN2/Docs
- Detailed signaling procedure for dual connectivity. *3GPP TSG RAN 2 Meeting #83bis*, http://www.3gpp. org/ftp/tsg_ran/W G2_RL2/TSGR2_83bis/Docs